# EUROPEAN PATENT APPLICATION

(11) **EP 4 618 180 A1**
(43) Date of publication of application: **17.09.2025**
(21) Application number: 23926873.3
(22) Date of filing: 03.04.2023
(51) Int. Cl.: H01M 4/134

(54) **ELECTRODE ASSEMBLY, SECONDARY BATTERY, AND ELECTRICAL DEVICE**

(30) Priority: 13.03.2023 CN 202310235462
(71) Applicant: Contemporary Amperex Technology (Hong Kong) Limited, Hong Kong (HK)
(72) Inventor: WU, Kai, Ningde, Fujian 352100 (CN); YAN, Qingwei, Ningde, Fujian 352100 (CN); LIU, Liangbin, Ningde, Fujian 352100 (CN); WANG, Jiazheng, Ningde, Fujian 352100 (CN); LV, Zijian, Ningde, Fujian 352100 (CN); DONG, Xiaobin, Ningde, Fujian 352100 (CN)
(74) Representative: Ziebig Hengelhaupt Intellectual Property Attorneys Patentanwaltskanzlei PartGmbB
(86) International application number: PCT/CN2023/086025
(87) International publication number: WO 2024/187521

(57) **Abstract**

The present application relates to the technical field of batteries, and provides an electrode assembly, a secondary battery, and an electrical device. A negative electrode active material layer comprises a first part and a second part in the thickness direction; the first part is a part close to a negative electrode current collector, in the charging and discharging process, the second part would preferentially undergo lithium intercalation, when a battery is charged, the lithiation state of the second part is relatively high, the lithiation state of the first part is relatively low, and the improvement by the second part for the electrochemical performance of the battery is greater than the improvement by the first part for the electrochemical performance of the battery; when the mass percentage of a silicon-based material in the first part in the first part is greater than the mass percentage of a silicon-based material in the second part in the second part, the expansion problem of the silicon-based materials in the negative electrode active material layer can be ameliorated. By setting 30% ≤ C₂/C₁ ≤ 95%, the second part can bear 30%-95% of capacity from a positive electrode, thereby further improving the initial Coulombic efficiency and the cycle and storage performance of the battery.

## Description

### CROSS-REFERENCE TO RELATED APPLICATION

The present application claims the priority of the Chinese Patent Application 202310235462.0 filed on March 13, 2023 and entitled "ELECTRODE ASSEMBLY, SECONDARY BATTERY, AND ELECTRICAL DEVICE", the content of which is incorporated herein by reference in its entirety.

### TECHNICAL FIELD

The present application relates to the technical field of batteries, and in particular, to an electrode assembly, a secondary battery, and an electric device.

### BACKGROUND

Silicon-based materials are currently a type of negative electrode material with a relatively high capacity per gram. However, their cycle performance and storage performance are not ideal. The main reason for this issue is that the silicon particles in the silicon-based negative electrode expand and pulverize, continuously generating new SEI, which consumes the active lithium in the positive electrode.

### SUMMARY

In view of the above issues, the present application provides an electrode assembly, a secondary battery, and an electric device, which can improve the initial efficiency, cycling, and storage performance of silicon-based batteries.

In a first aspect, the present application provides an electrode assembly, including: a positive electrode plate and a negative electrode plate, where the negative electrode plate includes a negative electrode active substance layer and a negative electrode current collector, where the negative electrode active substance layer includes a first portion and a second portion along a thickness direction, where the first portion is a portion close to the negative electrode current collector, and a mass percentage of silicon-based material in the first portion is greater than a mass percentage of silicon-based material in the second portion; the positive electrode plate includes a positive electrode active substance layer, where a unit area capacity of the positive electrode active substance layer is C₁, and a unit area capacity of the second portion is C₂, with 30% ≤ C₂/C₁ ≤ 95%.

In the technical solutions of the embodiments of the present application, the negative electrode active substance layer in the embodiments of the present application includes a first portion and a second portion along the thickness direction, and the first portion is the portion close to the negative electrode current collector. During the charging and discharging process, the second portion will preferentially intercalate lithium, that is, during battery charging, the lithiation state of the second portion is relatively higher, while the lithiation state of the first portion is relatively lower. Moreover, the enhancement of the battery's electrochemical performance by the second portion is greater than that by the first portion. When the mass percentage of the silicon-based material in the first portion is greater than the mass percentage of the silicon-based material in the second portion, the expansion issue of the silicon-based material in the negative electrode active substance layer can be mitigated. With the setting of 30% ≤ C₂/C₁ ≤ 95%, the second portion can take on 30% to 95% capacity from the positive electrode, thereby further improving the initial efficiency, cycling, and storage performance of the battery.

In some embodiments, 70% ≤ C₂/C₁ ≤ 90%. When 70% ≤ C₂/C₁ ≤ 90%, the second portion can take on 70% to 90% capacity from the positive electrode, thereby further improving the initial efficiency, cycling, and storage performance of the battery, as well as making the battery have a higher energy density.

In some embodiments, the first portion is a first negative electrode active layer formed on a surface of the negative electrode current collector, and the second portion is a second negative electrode active layer formed on a surface of the first negative electrode active layer; moreover, a difference between a mass percentage of silicon-based material in the first negative electrode active layer and a mass percentage of silicon-based material in the second negative electrode active layer is 30% to 80%. The negative electrode active substance layer has a layered structure of a first negative electrode active layer and a second negative electrode active layer, and when the difference between the mass percentage of silicon-based material in the first negative electrode active layer and the mass percentage of silicon-based material in the second negative electrode active layer is 30% to 80%, the mass percentage of the silicon-based material in the first portion is much greater than the mass percentage of the silicon-based material in the second portion, thereby further improving the expansion issue of the silicon-based material in the negative electrode active substance layer.

In some embodiments, a unit area capacity of the first portion is C₃, with 20% ≤ (C₁ - C₂)/C₃ ≤ 90%. When 20% ≤ (C₁ - C₂)/C₃ ≤ 90%, the second portion only needs to be lithiated to 20% to 90%. With a smaller amount of lithium intercalation, the relative expansion of the silicon-based material is reduced, and the number of fracture sites in the silicon-based material is decreased. As a result, the initial efficiency, cycling, and storage performance of the battery are improved.

In some embodiments, the unit area capacity of the first portion is C₃, with 50% ≤ (C₁ - C₂)/C₃ ≤ 75%. When 50% ≤ (C₁ - C₂)/C₃ ≤ 75%, the second portion only needs to be lithiated to 50% to 75%. With a smaller amount of lithium intercalation, the relative expansion of the silicon-based material is reduced, and the number of fracture sites in the silicon-based material is decreased. As a result, the initial efficiency, cycling, and storage performance of the battery are improved, and the energy density of the battery is further increased.

In some embodiments, the first portion includes 40 wt% to 80 wt% silicon-based materials, and the silicon-based materials include silicon oxide and/or silicon carbon. When the first portion includes 40 wt% to 80 wt% silicon-based materials, it is beneficial for enhancing the overall energy density of the negative electrode plate, while reducing the thickness of the first portion under the premise of a certain energy density, thereby shortening the diffusion path of lithium ions and balancing kinetic performance.

In some embodiments, the silicon-based materials in the first portion have a Dv50 of 1 µm to 8 µm and a Dv99 ≤ 20 µm. If the particle size of the silicon-based material is too large, it will affect the lithium-ion intercalation capacity, leading to an increased depth of lithium intercalation and affecting the electrochemical performance of the battery. If the particle size of the silicon-based material is too small, it will be difficult to process. Moreover, due to the fact that the mass percentage of the silicon-based material in the first portion is higher than the mass percentage of the silicon-based material in the second portion, when the silicon-based material has a Dv50 of 1 µm to 8 µm and a Dv99 ≤ 20 µm, it is not only beneficial for improving the electrochemical performance of the battery, but also capable of taking into account the processing performance and reducing the phenomenon of coating scratches.

In some embodiments, the first portion includes 10 wt% to 55 wt% graphite. The graphite in the first portion can provide capacity, and when the first portion includes 40 wt% to 80 wt% silicon-based materials, the graphite can serve as a conductive agent to balance the conductivity of the positive electrode active material when there is a larger amount of silicon-based materials in the first portion. When the first portion includes 10 wt% to 55 wt% graphite, it can balance the conductive effect and the energy density of the negative electrode plate.

In some embodiments, the graphite in the first portion has a Dv50 of 1 µm to 8 µm and a Dv99 ≤ 30 µm. Due to the low unit area weight and thin thickness of the first portion, controlling the particle size of graphite is beneficial for reducing coating difficulty and reducing the strip breakage caused by copper foil scratches. At the same time, it is beneficial for improving the electronic conductivity of the first portion. When the graphite has a Dv50 of 1 µm to 8 µm and a Dv99 ≤ 30 µm, it not only does not affect the processing of the negative electrode plate but also enables the negative electrode plate to have better conductivity.

In some embodiments, the first portion includes 3 wt% to 20 wt% binder, preferably with a glass transition temperature of the binder ≤ 25 °C. The binder can constrain the expansion of silicon-based materials. When the first portion includes 3 wt% to 20 wt% binder, the binder can control the volume effect brought by the silicon-based materials to varying degrees. Moreover, to take into account the processing performance of the negative electrode plate and reduce the occurrence of cracking and film detachment of the negative electrode plate, the coating process of the negative electrode active substance is usually carried out under normal temperature and pressure. A binder with a glass transition temperature ≤ 25 °C can meet the production requirements of normal temperature and pressure.

In some embodiments, the first portion includes 0.5 wt% to 5 wt% particulate conductive agent, preferably conductive carbon black. The particulate conductive agent can enhance the conductivity and electrolyte retention capability of the first portion.

In some embodiments, the first portion includes 0.05 wt% to 1.2 wt% carbon nanotubes, preferably single-arm carbon nanotubes. Carbon nanotubes possess high tensile strength, strong compressive resistance, and excellent electrical conductivity. When the first portion includes 0.05 wt% to 1.2 wt% carbon nanotubes, it can significantly enhance the electronic conductivity of the first portion. Carbon nanotubes can distribute on the surface of silicon-based material particles, thereby reducing the expansion of silicon-based material particles. However, due to the poor dispersibility of carbon nanotubes and their tendency to cause gelation in the slurry, carbon nanotubes cannot be added in large amounts. Keeping the content of carbon nanotubes within 1.2 wt% can balance the improvement of electronic conductivity and processing performance.

In some embodiments, an aspect ratio of the carbon nanotubes is ≥ 1000. When the aspect ratio of the carbon nanotubes is ≥ 1000, the ultra-high aspect ratio of the carbon nanotubes is beneficial for further enhancing the electronic conductivity of the first portion.

In some embodiments, the first portion further includes 1 wt% to 5 wt% surfactant, preferably sodium carboxymethylcellulose. Since the first portion contains carbon nanotubes, which have poor dispersibility, the inclusion of 1 wt% to 5 wt% surfactant in the first portion is beneficial for the uniform dispersion of carbon nanotubes, thereby stabilizing processing performance.

In some embodiments, a unit area weight of the first portion is 0.5 mg/cm² to 3.6 mg/cm². When the unit area weight of the first portion is 0.5 mg/cm² to 3.6 mg/cm², it can balance the kinetic performance of the battery and achieve industrial production.

In some embodiments, the second portion includes a graphite material and a silicon-based material in a mass ratio of (80-100):(0-20). Since the enhancement of the battery's electrochemical performance by the second portion is greater than that by the first portion, when the mass ratio of graphite material to silicon-based material in the second portion is (80~100):(0~20), the electrochemical performance of the battery is better.

In some embodiments, a Dv50 of the silicon-based material in the second portion is 1 µm to 8 µm, and a Dv50 of the graphite in the second portion is 1 µm to 20 µm. Since there are no technical issues related to the processing of the second portion, the requirements for particle size are less stringent. When the Dv50 of the silicon-based material in the second portion is 1 µm to 8 µm, and the Dv50 of the graphite in the second portion is 1 µm to 20 µm, production can be met.

In some embodiments, the negative electrode active substance layer has a unit area weight of 5.19 mg/cm² to 14.26 mg/cm² and a compaction density of 1.4 g/cm³ to 1.85 g/cm³. When the negative electrode active substance layer has a unit area weight of 5.19 mg/cm² to 14.26 mg/cm² and a compaction density of 1.4 g/cm³ to 1.85 g/cm³, the battery has a higher energy density.

In some embodiments, a thickness of the first portion is h₁, and a thickness of the second portion is h₂, with h₂ ÷ h₁ ≥ 0.9, preferably 20 ≥ h₂ ÷ h₁ ≥ 2. Controlling the thickness ratio of the second portion to the first portion to be ≥ 0.9 is beneficial for reducing the deterioration of kinetic performance.

In some embodiments, h₁ is 3 µm to 21.5 µm, and h₂ is 19 µm to 62.5 µm. When h₁ and h₂ are within the above thickness ranges and satisfy h₂ ÷ h₁ ≥ 0.9, it is beneficial for further reducing the deterioration of kinetic performance.

In some embodiments, the positive electrode plate includes a positive electrode active substance layer, and a unit area capacity of the negative electrode active substance layer is C₄, with 1.01C₁ ≤ C₄ ≤ 1.2C₁. When 1.01C₁ ≤ C₄ ≤ 1.2C₁, the safety of the battery can be improved, and the occurrence of lithium plating due to excessive lithium intercalation can be reduced.

In some embodiments, the second portion includes at least two sub-portions along the thickness direction, with different mass percentages of silicon-based material in each of the sub-portions. The second portion may further include a plurality of sub-portions, each sub-portion having different mass percentages of silicon-based material to accommodate different structures and different types of batteries.

In a second aspect, the present application provides a secondary battery, including the electrode assembly according to the above embodiments.

In a third aspect, the present application provides an electric device, including the secondary battery according to the above embodiments.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely with the purpose of illustrating the preferred embodiments and are not to be construed as limiting the scope of the present application. Furthermore, the same reference numerals in all the drawings denote identical components. In the drawings:
FIG. 1 is a schematic structural diagram of a vehicle according to some embodiments of the present application;
FIG. 2 is a schematic diagram of an exploded structure of a battery according to some embodiments of the present application;
FIG. 3 is a schematic diagram of an exploded structure of a battery cell according to some embodiments of the present application; and
FIG. 4 is a schematic structural diagram of a negative electrode plate according to some embodiments of the present application.

Reference numerals in the detailed description are as follows:
1000 - vehicle;
100 - battery; 200 - controller; 300 - motor;
10 - case; 11 - first structure; 12 - second structure;
20 - battery cell; 21 - end cover; 22 - housing; 23 - electrode assembly;
400 - negative electrode plate; 410 - negative electrode current collector; 420 - negative electrode active substance layer; 421 - first portion; 422 - second portion.

### DETAILED DESCRIPTION

Embodiments of the technical solutions of the present application will be described in detail below with reference to the drawings. The following embodiments are only for illustrating the technical solutions of the present application more clearly, and therefore are only used as examples and cannot be used to limit the protection scope of the present application.

Unless otherwise defined, all technical and scientific terms used herein have the same meaning as commonly understood by those skilled in the art to which the present application belongs. The terms used herein are only used to describe specific embodiments and are not intended to limit the present application. The terms "include", "comprise", "have", and any variants thereof in the specification and claims of the present application and the above description of the drawings are intended to cover non-exclusive inclusion.

In the description of the embodiments of the present application, technical terms such as "first" and "second" are only used to distinguish different objects and cannot be understood as indicating or implying relative importance or implicitly indicating the number, specific order, or primary and secondary relationship of the indicated technical features. In the description of the embodiments of the present application, unless otherwise specifically defined, "a plurality of" means two or more than two.

Reference in the present application to "an embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may represent: the existence of A alone, the simultaneous existence of A and B, and the existence of B alone. In addition, the character "/" herein generally indicates an "or" relationship between the associated objects before and after the "/".

In the description of the embodiments of the present application, the term "a plurality of" refers to more than two (including two). Similarly, "multiple groups" refers to more than two groups (including two groups), and "multiple pieces" refers to more than two pieces (including two pieces).

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicating directional or positional relationships are based on the directional or positional relationships shown in the drawings. They are merely for the convenience of describing the embodiments of the present application and simplifying the description, and are not intended to indicate or imply that the devices or elements referred to must have specific directions, be constructed and operated in specific directions. Therefore, these terms should not be construed as limitations on the embodiments of the present application.

In the description of the embodiments of the present application, unless otherwise clearly specified and defined, the technical terms "mount", "interconnect", "connect", "fix", and the like should be understood in their broad senses. For example, "connect" may be "fixedly connect", "detachably connect" or "integrally connect"; "mechanically connect", and "electrically connect"; or "directly interconnect", "indirectly interconnect through an intermediate", "communication between interiors of two elements", or "interaction between two elements". For those of ordinary skill in the art, the specific meanings of the above terms in the embodiments of the present application are interpreted according to specific conditions.

At present, judging from the development of the market situation, power batteries are applied more and more extensively. Power batteries are not only applied in energy storage power systems such as hydropower, thermal power, wind power, and solar power stations, but are also widely applied in electric transportation vehicles such as electric bicycles, electric motorcycles, and electric vehicles, as well as in military equipment, aerospace, and other fields. As the application fields of the power batteries continue to expand, the market demand thereof is also increasing.

Silicon-based materials are currently a type of negative electrode material with a relatively high capacity per gram, and silicon-based materials also have advantages such as low lithium intercalation potential and abundant availability, making them promising candidates for next-generation negative electrode materials. However, the cycle performance and storage performance of silicon-based materials are not ideal. The main reason for this issue is that the silicon particles in the silicon-based negative electrode expand and pulverize, continuously generating new SEI, which consumes the active lithium in the positive electrode.

To alleviate the issue of active lithium in the positive electrode being consumed due to the continuous generation of new SEI caused by the expansion and pulverization of silicon particles, the applicant's research found that during the charging and discharging process of the battery, along the thickness direction of the negative electrode active substance layer, the portion that is relatively closer to the positive electrode active substance layer will preferentially intercalate lithium. That is, during the battery charging process, within the negative electrode active substance layer, the lithiation state of the portion of the negative electrode active substance close to the positive electrode active substance layer becomes increasingly higher, while the lithiation state of the portion of the negative electrode active substance away from the positive electrode active substance layer (close to the negative electrode current collector) becomes increasingly lower. Meanwhile, the electrochemical performance of the battery tends to align with the performance of the portion close to the positive electrode active substance layer. When the partial area of the negative electrode active substance layer close to the positive electrode active substance layer contains more silicon-based materials, it results in relatively poorer initial efficiency, cycling, and storage performance of the battery.

Based on the above considerations, to improve the initial efficiency, cycling, and storage performance of silicon-based batteries, an electrode assembly is designed according to the embodiments of the present application. The negative electrode active substance layer includes a first portion and a second portion along the thickness direction, with the first portion being the portion close to the negative electrode current collector. During the charging and discharging process, the second portion will preferentially intercalate lithium, that is, during battery charging, the lithiation state of the second portion is relatively higher, while the lithiation state of the first portion is relatively lower. Moreover, the electrochemical performance of the battery is dominated by the second portion, and the enhancement of the battery's electrochemical performance by the second portion is greater than that by the first portion. When the mass percentage of the silicon-based material in the first portion is greater than the mass percentage of the silicon-based material in the second portion, the expansion issue of the silicon-based material in the negative electrode active substance layer can be mitigated. The unit area capacity C = unit area weight (g/cm2) * capacity per gram of active layer (mAh/g), while restricting 30% ≤ C2/C1 ≤ 95%, ensures that the second portion can bear 30% to 95% of the capacity from the positive electrode, further improving the initial efficiency, cycling, and storage performance of the battery.

The battery mentioned in the embodiments of the present application refers to a single physical module including a plurality of battery cells to provide higher voltage and capacity. A battery generally includes a battery case for packaging a plurality of battery cells, and the battery case can prevent liquids or other foreign substances from affecting the charging or discharging of the battery cells.

Each battery cell is a secondary battery and may be a lithium-ion battery or a lithium-sulfur battery, but is not limited to thereto. The battery cell may be cylindrical, flat, rectangular parallelepiped, or in other shapes. According to the packaging method, battery cells are generally categorized into three types: cylindrical battery cells, square battery cells, and soft-pack battery cells.

A battery cell includes an electrode assembly and an electrolyte. The electrode assembly is composed of a positive electrode plate, a negative electrode plate, and a separator. A battery cell primarily works by the movement of metal ions between the positive electrode plate and the negative electrode plate. The positive electrode plate includes a positive electrode current collector and a positive electrode active substance layer. The positive electrode active substance layer is coated on the surface of the positive electrode current collector. The positive electrode current collector not coated with the positive electrode active substance layer protrudes from the positive electrode current collector coated with the positive electrode active substance layer. The positive electrode current collector not coated with the positive electrode active substance layer serves as a positive electrode tab. Taking lithium-ion batteries as an example, the material of the positive electrode current collector may be aluminum, and the positive electrode active substance may be lithium cobaltate, lithium iron phosphate, ternary lithium, or lithium manganate, etc. The negative electrode plate includes a negative electrode current collector and a negative electrode active substance layer. The negative electrode active substance layer is coated on the surface of the negative electrode current collector. The negative electrode current collector not coated with the negative electrode active substance layer protrudes from the negative electrode current collector coated with the negative electrode active substance layer. The negative electrode current collector not coated with the negative electrode active substance layer serves as a negative electrode tab. The material of the negative electrode current collector may be copper. To ensure the passing of a large current without fusing, there are a plurality of positive electrode tabs that are stacked together, and there are a plurality of negative electrode tabs that are stacked together. The material of the separator may be polypropylene (PP), polyethylene (PE), or the like. In addition, the electrode assembly may be a winding structure or a stacking structure, but the embodiments of the present application are not limited thereto.

The battery cell further includes a current collecting member, which is configured to electrically connect the battery cell's tabs and electrode terminals to transfer electrical energy from the electrode assembly to the electrode terminals, and then from the electrode terminals to the exterior of the battery cell. A plurality of battery cells are electrically connected through busbar components to achieve series, parallel, or series-parallel connections of the plurality of battery cells.

The battery further includes a sampling terminal and a battery management system. The sampling terminal is connected to the busbar component and is configured to collect information from the battery cell, such as voltage or temperature. The sampling terminal transmits the collected information of the battery cell to the battery management system. The battery management system, when detecting that the information of the battery cell exceeds a normal range, will limit the output power of the battery to ensure safety protection.

It can be understood that the electric device suitable for using the battery described in the embodiments of the present application may take various forms, such as a mobile phone, a portable device, a laptop, an electric bicycle, an electric vehicle, a ship, a spacecraft, an electric toy, or an electric tool. For example, the spacecraft includes an airplane, a rocket, a space shuttle, a spaceship, or the like. The electric toy includes a stationary or mobile electric toy, such as a game console, an electric car toy, an electric ship toy, or an electric airplane toy. The electric tool includes a metal cutting electric tool, a grinding electric tool, an assembly electric tool, or a railway electric tool, such as an electric drill, an electric grinder, an electric wrench, an electric screwdriver, an electric hammer, an impact drill, a concrete vibrator, or an electric planer.

The battery cell and the battery described in the embodiments of the present application are not limited to the electric device described above but are applicable to all electric devices that use battery cells and batteries. However, for simplicity in description, the following embodiments are all illustrated using electric vehicles as examples.

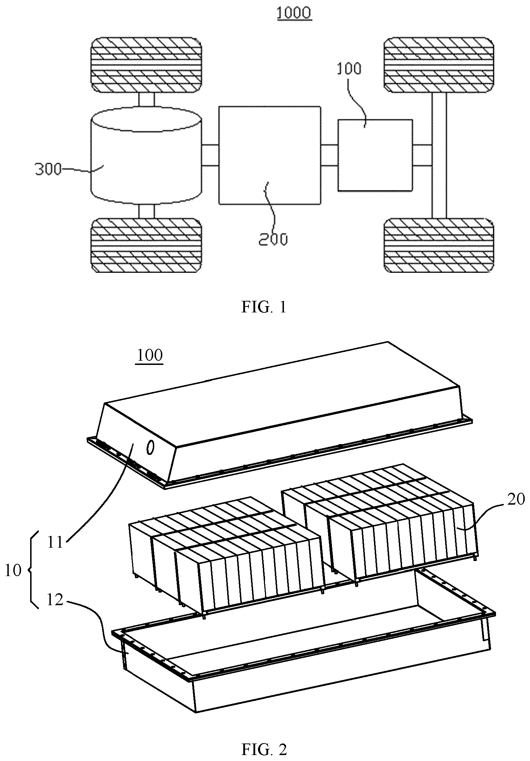

Referring to FIG. 1, FIG. 1 is a schematic structural diagram of a vehicle according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is provided inside the vehicle 1000, and the battery 100 may be provided at a bottom, a head, or a tail of the vehicle 1000. The battery 100 may be used for powering the vehicle 1000. For example, the battery 100 may serve as an operation power source of the vehicle 1000. The vehicle 1000 may further include a controller 200 and a motor 300. The controller 200 is used for controlling the battery 100 to power the motor 300, e.g., for operation power needed by the vehicle 1000 for start-up, navigation, and driving.

In some embodiments of the present application, the battery 100 may not only serve as the operation power source for the vehicle 1000, but also as a driving power source for the vehicle 1000 to, instead of or in part instead of fuel or natural gas, provide driving power for the vehicle 1000.

Referring to FIG. 2, FIG. 2 is an exploded view of a battery according to some embodiments of the present application. The battery 100 includes a case 10 and battery cells 20. The battery cells 20 are accommodated in the case 10. The case 10 is configured to provide an accommodating space for the battery cells 20, and the case 10 can be of various structures. In some embodiments, the case 10 may include a first structure 11 and a second structure 12. The first structure 11 and the second structure 12 are mutually lidded onto each other, and the first structure 11 and the second structure 12 jointly define an accommodating space for accommodating the battery cells 20. The second structure 12 may be a hollow structure with one end open, and the first structure 11 may be a plate-like structure. The first structure 11 lids the open side of the second structure 12, such that the first structure 11 and the second structure 12 jointly define the accommodating space. The first structure 11 and the second structure 12 may both be a hollow structure with one side open, and the open side of the first structure 11 lids the open side of the second structure 12. Certainly, the case 10 formed by the first structure 11 and the second structure 12 may be of various shapes such as cylindrical and rectangular parallelepiped.

In the battery 100, there may be a plurality of battery cells 20, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, it may be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10. The battery 100 may further include other structures. For example, the battery 100 may further include a busbar component for achieving electrical connection between the plurality of battery cells 20.

Each battery cell 20 is a secondary battery and may be a lithium-ion battery, a lithium-sulfur battery, a sodium-ion battery, or a magnesium-ion battery, but is not limited to these. The battery cell 20 may be cylindrical, flat, rectangular parallelepiped, or in other shapes.

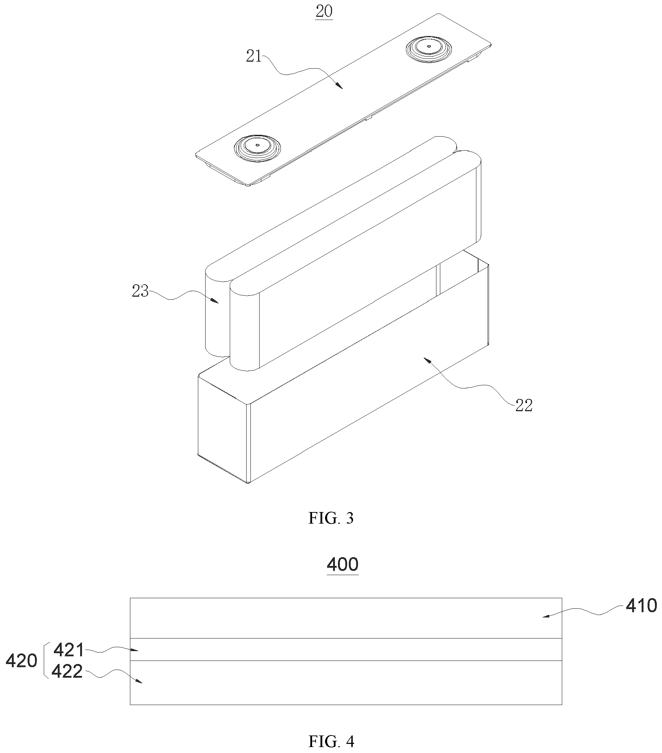

Referring to FIG. 3, FIG. 3 is a schematic diagram of an exploded structure of a first type of battery cell according to some embodiments of the present application. The battery cell 20 refers to the smallest unit forming a battery. As shown in FIG. 3, the battery cell 20 includes an end cover 21, a housing 22, an electrode assembly 23, and other functional components.

The end cover 21 refers to the component that lids the opening of the housing 22 to isolate the internal environment of the battery cell 20 from the external environment. Without limitation, the shape of the end cover 21 may be adapted to match the shape of the housing 22 to fit the housing 22. Optionally, the end cover 21 may be made of a material with certain hardness and strength, such as aluminum alloy, so that the end cover 21 is less likely to deform under pressure or impact, thereby providing the battery cell 20 with higher structural strength and improved safety performance. Functional components, such as electrode terminals, may be provided on the end cover 21. The electrode terminals may be configured to electrically connect with the electrode assembly 23 for outputting or inputting electrical energy of the battery cell 20. In some embodiments, the end cover 21 may also be provided with a pressure relief mechanism for releasing internal pressure when the internal pressure or temperature of the battery cell 20 reaches a threshold. The end cover 21 may also be made of a variety of materials, such as copper, iron, aluminum, stainless steel, aluminum alloy, or plastic, which is not limited in the embodiments of the present application. In some embodiments, an insulating member may further be provided on the inner side of the end cover 21. The insulating member may be configured to isolate the electrical connection components inside the housing 22 from the end cover 21, reducing the risk of short circuits. Exemplarily, the insulating member may be made of plastic, rubber, or the like.

The housing 22 is an assembly used in conjunction with the end cover 21 to form the internal environment of the battery cell 20, where the formed internal environment may be used to accommodate the electrode assembly 23, electrolyte, and other components. The housing 22 and the end cover 21 may be independent components, and an opening may be provided on the housing 22. The end cover 21 lids the opening to form the internal environment of the battery cell 20. Without limitation, the end cover 21 and the housing 22 may be integrated. Specifically, the end cover 21 and the housing 22 may form a common connection surface before other components are inserted into the housing. When it is necessary to seal the interior of the housing 22, the end cover 21 then lids the housing 22. The housing 22 may come in various shapes and sizes, such as rectangular parallelepiped, cylindrical, or hexagonal prism. Specifically, the shape of the housing 22 may be determined based on the specific shape and size of the electrode assembly 23. The housing 22 may be made of a variety of materials, such as copper, iron, aluminum, stainless steel, aluminum alloy, or plastic, which is not limited in the embodiments of the present application.

The electrode assembly 23 is a component where the electrochemical reaction occurs in the battery cell 20. The housing 22 may contain one or more electrode assemblies 23. The electrode assembly 23 is primarily formed by winding or stacking positive and negative electrode plates, and a separation film is usually arranged between the positive electrode plate and the negative electrode plate. The portions of the positive electrode plate and the negative electrode plate that contain active substances constitute the body part of the electrode assembly, and the portions of the positive electrode plate and the negative electrode plate that do not contain active substances each form a tab. The positive electrode tab and the negative electrode tab may be located together at one end of the body part or separately at two ends of the body part. During the charging and discharging process of the battery, the positive electrode active substance and the negative electrode active substance react with the electrolyte, and the tabs are connected to the electrode terminals to form a current circuit.

According to some embodiments of the present application, referring to FIG. 4, FIG. 4 is a schematic structural diagram of a negative electrode plate according to some embodiments of the present application.

The present application provides an electrode assembly, which includes: a positive electrode plate and a negative electrode plate 400. The negative electrode plate 400 includes a negative electrode active substance layer 420 and a negative electrode current collector 410. The negative electrode active substance layer 420 includes a first portion 421 and a second portion 422 along the thickness direction. The first portion 421 is the portion close to the negative electrode current collector 410, and the mass percentage of silicon-based material in the first portion 421 is greater than that in the second portion 422. The unit area capacity of the positive electrode plate is C₁, and the unit area capacity of the second portion 422 is C₂, where 30% ≤ C₂/C₁ ≤ 95%.

The first portion 421 is the portion of the negative electrode active substance layer 420 that is close to the negative electrode current collector 410.

The second portion 422 is the portion of the negative electrode active substance layer 420 that is away from the negative electrode current collector 410, which is the remaining portion of the entire negative electrode active substance layer 420 after removing the first portion 421.

The mass percentage of silicon-based material in the first portion 421 is the percentage of the mass of silicon-based material relative to the total mass of the first portion 421.

The mass percentage of silicon-based material in the second portion 422 is the percentage of the mass of silicon-based material relative to the total mass of the second portion 422.

The unit area capacity C₁ of the positive electrode active substance layer is measured using methods well-known in the art. As an example, the following method may be used for measurement:
S1: cleaning any one side of a double-sided positive electrode plate thoroughly;
S2: using a mold to punch the single-sided positive electrode plate into a small disc with a radius of 7 mm and an area of S = 0.49π, where the unit of area S is cm²;
S3: after drying the single-sided positive electrode plate with the area S, transferring the single-sided positive electrode plate to a glove box to manufacture a paired lithium half-cell; and
S4: using the testing equipment from Wuhan Land Electronics to measure the capacity Q₁ of the above disc, where the unit of capacity Q₁ is mAh; by calculation, the unit area capacity of the positive electrode active substance layer can be obtained as C₁ = Q₁ ÷ S, with the unit area capacity of the negative electrode active substance layer C₁ expressed in mAh/cm².

The unit area capacity C₂ of the second portion is measured using methods well-known in the art. As an example, the following method may be used for measurement:
S1: cleaning any one side of a double-sided negative electrode plate thoroughly;
S2: using a mold to punch the single-sided negative electrode plate into a small disc with a radius of 7 mm and an area of S = 0.49π, where the unit of area S is cm²;
S3: after drying the single-sided negative electrode plate with the area S, transferring the single-sided negative electrode plate to a glove box to manufacture a paired lithium half-cell;
S4: using the testing equipment from Wuhan Land Electronics to measure the capacity Q₄ of the above disc, where the unit of capacity Q₄ is mAh; by calculation, the unit area capacity of the negative electrode active substance layer can be obtained as C₄ = Q₄ ÷ S, with the unit area capacity of the negative electrode active substance layer C₄ expressed in mAh/cm²;
S5: using tape to peel off the second portion of the single-sided negative electrode plate that has been processed in step S1; and
S6: testing the capacity Q₃ of the first portion of the negative electrode plate, from which the second portion has been peeled off, by using the same method as in steps S2, S3, and S4, where the unit of capacity Q₃ is mAh; by calculation, the unit area capacity of the first portion can be obtained as C₃ = Q₃ ÷ S, with the unit area capacity of the negative electrode active substance layer expressed in mAh/cm²; the unit area capacity of the second portion is C₂ = C₄ - C₃, with the unit area capacity of the negative electrode active substance layer C₂ expressed in mAh/cm².

As an example, the value of C₂/C₁ may be 30%, 35%, 40%, 45%, 50%, 55%, 60%, 65%, 70%, 75%, 80%, 85%, 90%, or 95%.

In the embodiments of the present application, the negative electrode active substance layer includes a first portion and a second portion along the thickness direction, and the first portion is the portion close to the negative electrode current collector. During the charging and discharging process, the second portion will preferentially intercalate lithium, that is, during battery charging, the lithiation state of the second portion is relatively higher, while the lithiation state of the first portion is relatively lower. Moreover, the enhancement of the battery's electrochemical performance by the second portion is greater than that by the first portion. When the mass percentage of the silicon-based material in the first portion is greater than the mass percentage of the silicon-based material in the second portion, the expansion issue of the silicon-based material in the negative electrode active substance layer can be mitigated. With the setting of 30% ≤ C₂/C₁ ≤ 95%, the second portion can take on 30% to 95% capacity from the positive electrode, thereby further improving the initial efficiency, cycling, and storage performance of the battery.

According to some embodiments of the present application, optionally, 70% ≤ C₂/C₁ ≤ 90%.

When 70% ≤ C₂/C₁ ≤ 90%, the second portion can take on 70% to 90% capacity from the positive electrode, thereby further improving the initial efficiency, cycling, and storage performance of the battery, as well as making the battery have a higher energy density.

According to some embodiments of the present application, optionally, the unit area capacity of the first portion is C₃, where 20% ≤ (C₁ - C₂)/C₃ ≤90%.

The unit area capacity C₃ of the first portion is measured according to the measurement method for the unit area capacity C₂ of the second portion.

As an example, the value of (C₁ - C₂)/C₃ may be 20%, 25%, 30%, 35%, 40%, 45%, 50%, 55%, 60%, 65%, 70%, 75%, 80%, 85%, or 90%.

When 20% ≤ (C₁ - C₂)/C₃ ≤ 90%, the second portion only needs to be lithiated to 20% to 90%. With a smaller amount of lithium intercalation, the relative expansion of the silicon-based material is reduced, and the number of fracture sites in the silicon-based material is decreased. As a result, the initial efficiency, cycling, and storage performance of the battery are improved.

According to some embodiments of the present application, optionally, the first portion is the first negative electrode active layer formed on the surface of the negative electrode current collector, and the second portion is the second negative electrode active layer formed on the surface of the first negative electrode active layer. Moreover, the difference between the mass percentage of silicon-based material in the first negative electrode active layer and the mass percentage of silicon-based material in the second negative electrode active layer is 30% to 80%.

As an example, the difference between the mass percentage of silicon-based material in the first negative electrode active layer and the mass percentage of silicon-based material in the second negative electrode active layer may be 30%, 35%, 40%, 45%, 50%, 55%, 60%, 65%, 70%, 75%, or 80%.

The negative electrode active substance layer has a layered structure of a first negative electrode active layer and a second negative electrode active layer, and when the difference between the mass percentage of silicon-based material in the first negative electrode active layer and the mass percentage of silicon-based material in the second negative electrode active layer is 30% to 80%, the mass percentage of the silicon-based material in the first portion is much greater than the mass percentage of the silicon-based material in the second portion, thereby further improving the expansion issue of the silicon-based material in the negative electrode active substance layer.

Optionally, the difference between the mass percentage of silicon-based material in the first negative electrode active layer and the mass percentage of silicon-based material in the second negative electrode active layer is 30% to 50%.

According to some embodiments of the present application, optionally, the unit area capacity of the first portion is C₃, where 50% ≤ (C₁ - C₂)/C₃ ≤75%.

When 50% ≤ (C₁ - C₂)/C₃ ≤ 75%, the second portion only needs to be lithiated to 50% to 75%. With a smaller amount of lithium intercalation, the relative expansion of the silicon-based material is reduced, and the number of fracture sites in the silicon-based material is decreased. As a result, the initial efficiency, cycling, and storage performance of the battery are improved, and the energy density of the battery is further increased.

According to some embodiments of the present application, optionally, the first portion includes 40 wt% to 80 wt% silicon-based materials, which include any one or more of elemental silicon, silicon oxide, and silicon carbon.

As an example, the first portion may include 40 wt%, 45 wt%, 50 wt%, 55 wt%, 60 wt%, 65 wt%, 70 wt%, 75 wt%, or 80 wt% silicon-based material.

As an example, the silicon-based material may be entirely elemental silicon, entirely silicon oxide, entirely silicon carbon, or a mixture of elemental silicon and silicon oxide, a mixture of elemental silicon and silicon carbon, a mixture of silicon oxide and silicon carbon, or a mixture of elemental silicon, silicon oxide, and silicon carbon.

Optionally, the silicon-based material includes silicon oxide and/or silicon carbon.

When the first portion includes 40 wt% to 80 wt% silicon-based materials, it is beneficial for enhancing the overall energy density of the negative electrode plate, while reducing the thickness of the first portion under the premise of a certain energy density, thereby shortening the diffusion path of lithium ions and balancing kinetic performance.

Optionally, the first portion includes 50 wt% to 60 wt% silicon-based materials.

According to some embodiments of the present application, optionally, the silicon-based materials in the first portion have a Dv50 of 1 µm to 8 µm and a Dv99 ≤ 20 µm.

If the particle size of the silicon-based material is too large, it will affect the lithium-ion intercalation capacity, leading to an increased depth of lithium intercalation and affecting the electrochemical performance of the battery. If the particle size of the silicon-based material is too small, it will be difficult to process. Moreover, due to the fact that the mass percentage of the silicon-based material in the first portion is higher than the mass percentage of the silicon-based material in the second portion, when the silicon-based material has a Dv50 of 1 µm to 8 µm and a Dv99 ≤ 20 µm, it is not only beneficial for improving the electrochemical performance of the battery, but also capable of taking into account the processing performance and reducing the phenomenon of coating scratches.

According to some embodiments of the present application, optionally, the first portion includes 10 wt% to 55 wt% graphite.

As an example, the first portion may include 10 wt%, 15 wt%, 20 wt%, 25 wt%, 30 wt%, 35 wt%, 40 wt%, 45 wt%, 50 wt%, or 55 wt% graphite.

The graphite in the first portion can provide capacity, and when the first portion includes 40 wt% to 80 wt% silicon-based materials, the graphite can serve as a conductive agent to balance the conductivity of the positive electrode active material when there is a larger amount of silicon-based materials in the first portion. When the first portion includes 10 wt% to 55 wt% graphite, it can balance the conductive effect and the energy density of the negative electrode plate.

Optionally, the first portion includes 30 wt% to 40 wt% graphite.

According to some embodiments of the present application, optionally, the graphite in the first portion has a Dv50 of 1 µm to 8 µm and a Dv99 ≤ 30 µm.

Due to the low unit area weight and thin thickness of the first portion, controlling the particle size of graphite is beneficial for reducing coating difficulty and reducing the strip breakage caused by copper foil scratches. At the same time, it is beneficial for improving the electronic conductivity of the first portion. When the graphite has a Dv50 of 1 µm to 8 µm and a Dv99 ≤ 30 µm, it not only does not affect the processing of the negative electrode plate but also enables the negative electrode plate to have better conductivity.

According to some embodiments of the present application, optionally, the first portion includes 3 wt% to 20 wt% binder, preferably with a glass transition temperature of the binder ≤ 25 °C.

As an example, the first portion may include 3 wt%, 5 wt%, 8 wt%, 10 wt%, 12 wt%, 15 wt%, 18 wt%, or 20 wt% binder.

The binder can constrain the expansion of silicon-based materials. When the first portion includes 3 wt% to 20 wt% binder, the binder can control the volume effect brought by the silicon-based materials to varying degrees. Moreover, to take into account the processing performance of the negative electrode plate and reduce the occurrence of cracking and film detachment of the negative electrode plate, the coating process of the negative electrode active substance is usually carried out under normal temperature and pressure. A binder with a glass transition temperature ≤ 25 °C can meet the production requirements of normal temperature and pressure.

Optionally, the first portion includes 12 wt% to 15 wt% binder.

Optionally, the binder is styrene-butadiene rubber.

The glass transition temperature of styrene-butadiene rubber (SBR) is below 0 °C. Selecting SBR as the binder for the first portion can more effectively suppress the expansion of silicon particles while ensuring better mechanical performance and structural stability of the negative electrode plate.

According to some embodiments of the present application, optionally, the first portion includes 0.5 wt% to 5 wt% particulate conductive agent, preferably conductive carbon black.

The particulate conductive agent is a conductive substance with an aspect ratio of less than 1.5.

As an example, the first portion may further include 0.5 wt%, 1 wt%, 2 wt%, 3 wt%, 4 wt%, or 5 wt% particulate conductive agent.

The particulate conductive agent can enhance the conductivity and electrolyte retention capability of the first portion.

Optionally, the first portion includes 1 wt% to 2 wt% particulate conductive agent.

Optionally, the particulate conductive agent includes any one or more of superconductive carbon, acetylene black, Ketjen black, conductive carbon black, graphene, and carbon dots.

According to some embodiments of the present application, optionally, the first portion includes 0.05 wt% to 1.2 wt% carbon nanotubes, preferably single-arm carbon nanotubes.

As an example, the first portion may include 0.05 wt%, 0.1 wt%, 0.2 wt%, 0.5 wt%, 0.8 wt%, 1 wt%, or 1.2 wt%.

Carbon nanotubes possess high tensile strength, strong compressive resistance, and excellent electrical conductivity. When the first portion includes 0.05 wt% to 1.2 wt% carbon nanotubes, it can significantly enhance the electronic conductivity of the first portion. Carbon nanotubes can distribute on the surface of silicon-based material particles, thereby reducing the expansion of silicon-based material particles. However, due to the poor dispersibility of carbon nanotubes and their tendency to cause gelation in the slurry, carbon nanotubes cannot be added in large amounts. Keeping the content of carbon nanotubes within 1.2 wt% can balance the improvement of electronic conductivity and processing performance. Single-arm carbon nanotubes are linear materials.

Optionally, the first portion includes 0.1 wt% to 0.4 wt% carbon nanotubes.

According to some embodiments of the present application, optionally, the aspect ratio of the carbon nanotubes is ≥ 1000.

As an example, the aspect ratio of the carbon nanotubes may be 1000, 1500, 2000, 2500, 3000, 3500, 4000, 4500, 5000, 5500, 6000, 6500, 7000, 7500, 8000, 8500, 9000, 9500, or 10000.

When the aspect ratio of the carbon nanotubes is > 1000, the ultra-high aspect ratio of the carbon nanotubes is beneficial for further enhancing the electronic conductivity of the first portion.

Optionally, the aspect ratio of the carbon nanotubes is 1000 to 10000.

According to some embodiments of the present application, optionally, the first portion further includes 1 wt% to 5 wt% surfactant, preferably sodium carboxymethylcellulose.

As an example, the first portion may further include 1 wt%, 2 wt%, 3 wt%, 4 wt%, or 5 wt% surfactant.

Since the first portion contains carbon nanotubes, which have poor dispersibility, the inclusion of 1 wt% to 5 wt% surfactant in the first portion is beneficial for the uniform dispersion of carbon nanotubes, thereby stabilizing processing performance.

Optionally, the first portion further includes 1.5 wt% to 3 wt% surfactant.

According to some embodiments of the present application, optionally, the unit area weight of the first portion is 0.5 mg/cm² to 3.6 mg/cm².

As an example, the unit area weight of the first portion may be 0.5 mg/cm², 0.8 mg/cm², 1 mg/cm², 1.5 mg/cm², 2 mg/cm², 2.5 mg/cm², 3 mg/cm², 3.5 mg/cm², or 3.6 mg/cm².

When the unit area weight of the first portion is 0.5 mg/cm² to 3.6 mg/cm², it can balance the kinetic performance of the battery and achieve industrial production.

According to some embodiments of the present application, optionally, the second portion includes a graphite material and a silicon-based material in a mass ratio of (80~100):(0~20).

The second portion includes a graphite material but does not include a silicon-based material.

Alternatively, the second portion includes a graphite material and a silicon-based material.

As an example, the mass ratio of graphite material to silicon-based material in the second portion may be 80:20, 85:15, 90:10, 95:5, or 100:0.

Since the enhancement of the battery's electrochemical performance by the second portion is greater than that by the first portion, when the mass ratio of graphite material to silicon-based material in the second portion is (80~100):(0~20), the electrochemical performance of the battery is better.

Optionally, the mass ratio of graphite material to silicon-based material in the second portion is 100:0, that is, the second portion does not include the silicon-based material.

According to some embodiments of the present application, optionally, the Dv50 of the silicon-based material in the second portion is 1 µm to 8 µm, and the Dv50 of the graphite in the second portion is 1 µm to 20 µm.

Since there are no technical issues related to the processing of the second portion, the requirements for particle size are less stringent. When the Dv50 of the silicon-based material in the second portion is 1 µm to 8 µm, and the Dv50 of the graphite in the second portion is 1 µm to 20 µm, production can be met.

According to some embodiments of the present application, optionally, the negative electrode active substance layer has a unit area weight of 5.19 mg/cm² to 14.26 mg/cm² and a compaction density of 1.4 g/cm³ to 1.85 g/cm³.

As an example, the unit area weight of the negative electrode active substance layer may be 5.19 mg/cm², 5.5 mg/cm², 6 mg/cm², 6.5 mg/cm², 7 mg/cm², 7.5 mg/cm², 8 mg/cm², 8.5 mg/cm², 9 mg/cm², 9.5 mg/cm², 10 mg/cm², 10.5 mg/cm², 11 mg/cm², 11.5 mg/cm², 12 mg/cm², 12.5 mg/cm², 13 mg/cm², 13.5 mg/cm², 14 mg/cm², or 14.26 mg/cm².

As an example, the compaction density of the negative electrode active substance layer may be 1.4 g/cm³, 1.5 g/cm³, 1.6 g/cm³, 1.7 g/cm³, 1.8 g/cm³, or 1.85 g/cm³.

When the negative electrode active substance layer has a unit area weight of 5.19 mg/cm² to 14.26 mg/cm² and a compaction density of 1.4 g/cm³ to 1.85 g/cm³, the battery has a higher energy density.

According to some embodiments of the present application, optionally, the thickness of the first portion is h₁, the thickness of the second portion is h₂, and h₂ ÷ h₁ ≥ 0.9, preferably 20 ≥ h₂ ÷ h₁ ≥ 2.

Controlling the thickness ratio of the second portion to the first portion to be ≥ 0.9 is beneficial for reducing the deterioration of kinetic performance.

According to some embodiments of the present application, optionally, h₁ is 3 µm to 21.5 µm, and h₂ is 19 µm to 62.5 µm.

As an example, h₁ may be 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, 10.5 µm, 11 µm, 11.5 µm, 12 µm, 12.5 µm, 13 µm, 13.5 µm, 14 µm, 14.5 µm, 15 µm, 15.5 µm, 16 µm, 16.5 µm, 17 µm, 17.5 µm, 18 µm, 18.5 µm, 19 µm, 19.5 µm, 20 µm, 20.5 µm, 21 µm, or 21.5 µm.

h₂ may be 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 51 µm, 52 µm, 53 µm, 54 µm, 55 µm, 56 µm, 57 µm, 58 µm, 59 µm, 60 µm, 61 µm, or 61.5 µm.

When h₁ and h₂ are within the above thickness ranges and satisfy h₂ ÷ h₁ ≥ 0.9, it is beneficial for further reducing the deterioration of kinetic performance.

According to some embodiments of the present application, optionally, the positive electrode plate includes a positive electrode active substance layer, and the unit area capacity of the negative electrode active substance layer is C₄, where 1.01C₁ ≤ C₄ ≤ 1.2C₁.

When 1.01C₁ ≤ C₄ ≤ 1.2C₁, the safety of the battery can be improved, and the occurrence of lithium plating due to excessive lithium intercalation can be reduced.

According to some embodiments of the present application, optionally, the second portion includes at least two sub-portions along the thickness direction, with different mass percentages of silicon-based material in each sub-portion.

The second portion may further include a plurality of sub-portions, each sub-portion having different mass percentages of silicon-based material to accommodate different structures and different types of batteries.

The following provides a further detailed description of the secondary battery of the present application in conjunction with examples.

### Example 1

The example of the present application provides a secondary battery and a method for preparing the same, which includes the following steps:

### S1: Prepare the negative electrode plate

Form the first portion:
Mix silicon monoxide, artificial graphite, styrene-butadiene rubber, conductive carbon black (SP), single-arm carbon nanotubes, and sodium carboxymethylcellulose in a mass ratio of 50:32.2:15:1:0.3:1.5 in deionized water, and stir the mixture thoroughly to prepare a first negative electrode slurry. Then, evenly coat the slurry onto a copper current collector with a thickness of 8 µm and a 2 µm conductive carbon undercoat. After drying, obtain a semi-finished negative electrode plate with a unit area weight of 0.990 mg/cm².

The silicon monoxide has a Dv50 of 5 µm, the artificial graphite has a Dv50 of 4.7 µm and a Dv99 of 13 µm, and the single-arm carbon nanotube has an aspect ratio of 5000.

Form the second portion:
Mix artificial graphite, styrene-butadiene rubber, sodium carboxymethylcellulose, and conductive carbon black (Super-P, SP) in a mass ratio of 96.2:1.8:1.2:0.8 in deionized water, and stir the mixture thoroughly to prepare a second negative electrode slurry. Coat the slurry onto the first portion to form the second portion. After drying, cold pressing, and cutting, obtain a negative electrode plate with a compaction density of 1.65 g/cm³ and a unit area weight of 10.418 mg/cm².

The artificial graphite has a Dv50 of 15.3 µm.

The silicon content in the negative electrode active substance layer of the negative electrode plate is 4.75 wt%.

### S2: Prepare the positive electrode plate

Mix lithium nickel cobalt manganese oxide LiNi_{0.8}Co_{0.1}Mn_{0.1}O₂ (NCM811), conductive carbon black (Super P), and polyvinylidene fluoride in a weight ratio of 97.5:1.5:1 in an appropriate amount of N-methylpyrrolidone, and stir the mixture thoroughly to form a uniform positive electrode slurry. Coat the positive electrode slurry onto the surface of the positive electrode current collector aluminum foil. After drying, cold pressing, slitting, and cutting, obtain a positive electrode plate with a compaction density of 3.5 g/cm³ and a unit area weight of 18.04 mg/cm².

### S3: Select the separator

Use a polyethylene film with a thickness of 12 µm as the separator.

### S4: Prepare the electrolyte

Mix ethylene carbonate, ethyl methyl carbonate, and diethyl carbonate in a volume ratio of 1:1:1, then uniformly dissolve LiPF₆ in the above solution to obtain the electrolyte. The concentration of LiPF₆ in the electrolyte is 1 mol/L.

### S5: Manufacture the secondary battery

Stack the positive electrode plate, separator, and negative electrode plate in sequence, with the separator disposed between the positive electrode plate and the negative electrode plate to serve as a separation. Provide lithium foil on the surface of the non-reactive area, then wind to obtain an electrode assembly. Place the electrode assembly into an outer packaging shell, and after drying, inject the electrolyte. After procedures such as vacuum packaging, standing, formation, shaping, and the like, obtain a secondary battery.

### Example 2

The example of the present application provides a secondary battery and a method for preparing the same. In Example 2, based on Example 1, the unit area weight of the semi-finished negative electrode plate is changed to 3.532 mg/cm², and the unit area weight of the negative electrode plate is changed to 6.882 mg/cm², with other parameters remaining unchanged.

The silicon content in the negative electrode active substance layer of the negative electrode plate is 25.66 wt%.

### Example 3

The example of the present application provides a secondary battery and a method for preparing the same. In Example 3, based on Example 1, the unit area weight of the semi-finished negative electrode plate is changed to 2.603 mg/cm², and the unit area weight of the negative electrode plate is changed to 8.174 mg/cm², with other parameters remaining unchanged.

The silicon content in the negative electrode active substance layer of the negative electrode plate is 15.92 wt%.

### Example 4

The example of the present application provides a secondary battery and a method for preparing the same. In Example 4, based on Example 1, the unit area weight of the semi-finished negative electrode plate is changed to 1.669 mg/cm², and the unit area weight of the negative electrode plate is changed to 9.472 mg/cm², with other parameters remaining unchanged.

The silicon content in the negative electrode active substance layer of the negative electrode plate is 8.81 wt%.

### Example 5

The example of the present application provides a secondary battery and a method for preparing the same. In Example 5, based on Example 1, the unit area weight of the semi-finished negative electrode plate is changed to 0.5 mg/cm², and the unit area weight of the negative electrode plate is changed to 11.1 mg/cm², with other parameters remaining unchanged.

The silicon content in the negative electrode active substance layer of the negative electrode plate is 2.25 wt%.

### Example 6

The example of the present application provides a secondary battery and a method for preparing the same. In Example 6, based on Example 1, the unit area weight of the semi-finished negative electrode plate is changed to 1.168 mg/cm², and the unit area weight of the negative electrode plate is changed to 11.769 mg/cm², with other parameters remaining unchanged.

The silicon content in the negative electrode active substance layer of the negative electrode plate is 4.96 wt%.

### Example 7

The example of the present application provides a secondary battery and a method for preparing the same. In Example 7, based on Example 1, the unit area weight of the semi-finished negative electrode plate is changed to 0.73 mg/cm², and the unit area weight of the negative electrode plate is changed to 10.779 mg/cm², with other parameters remaining unchanged.

The silicon content in the negative electrode active substance layer of the negative electrode plate is 3.39 wt%.

### Example 8

The example of the present application provides a secondary battery and a method for preparing the same. In Example 8, based on Example 1, the unit area weight of the semi-finished negative electrode plate is changed to 0.93 mg/cm², and the unit area weight of the negative electrode plate is changed to 10.945 mg/cm², with other parameters remaining unchanged.

The silicon content in the negative electrode active substance layer of the negative electrode plate is 4.25 wt%.

### Example 9

The example of the present application provides a secondary battery and a method for preparing the same. In Example 9, based on Example 1, the unit area weight of the semi-finished negative electrode plate is changed to 0.7 mg/cm², and the unit area weight of the negative electrode plate is changed to 10.565 mg/cm², with other parameters remaining unchanged.

The silicon content in the negative electrode active substance layer of the negative electrode plate is 3.31 wt%.

### Example 10

The example of the present application provides a secondary battery and a method for preparing the same. In Example 10, based on Example 1, the unit area weight of the semi-finished negative electrode plate is changed to 0.7 mg/cm², and the unit area weight of the negative electrode plate is changed to 10.821 mg/cm², with other parameters remaining unchanged.

The silicon content in the negative electrode active substance layer of the negative electrode plate is 3.23 wt%.

### Example 11

The example of the present application provides a secondary battery and a method for preparing the same. In Example 11, based on Example 1, the ratio of silicon monoxide, artificial graphite, styrene-butadiene rubber, conductive carbon black (SP), single-arm carbon nanotubes, and sodium carboxymethylcellulose in the first portion is changed to 30:63.7:3.5:1:0.3:1.5; the unit area weight of the semi-finished negative electrode plate is changed to 1.26 mg/cm², and the unit area weight of the negative electrode plate is changed to 10.692 mg/cm², with other parameters remaining unchanged.

The silicon content in the negative electrode active substance layer of the negative electrode plate is 3.54 wt%.

### Example 12

The example of the present application provides a secondary battery and a method for preparing the same. In Example 12, based on Example 1, the ratio of silicon monoxide, artificial graphite, styrene-butadiene rubber, conductive carbon black (SP), single-arm carbon nanotubes, and sodium carboxymethylcellulose in the first portion is changed to 40:55:2.2:1:0.3:1.5; the unit area weight of the semi-finished negative electrode plate is changed to 1.08 mg/cm², and the unit area weight of the negative electrode plate is changed to 10.496 mg/cm², with other parameters remaining unchanged.

The silicon content in the negative electrode active substance layer of the negative electrode plate is 4.12 wt%.

### Example 13

The example of the present application provides a secondary battery and a method for preparing the same. In Example 13, based on Example 1, the ratio of silicon monoxide, artificial graphite, styrene-butadiene rubber, conductive carbon black (SP), single-arm carbon nanotubes, and sodium carboxymethylcellulose in the first portion is changed to 60:22.2:15:1:0.3:1.5; the unit area weight of the semi-finished negative electrode plate is changed to 0.88 mg/cm², and the unit area weight of the negative electrode plate is changed to 10.294 mg/cm², with other parameters remaining unchanged.

The silicon content in the negative electrode active substance layer of the negative electrode plate is 5.13 wt%.

### Example 14

The example of the present application provides a secondary battery and a method for preparing the same. In Example 14, based on Example 1, the ratio of silicon monoxide, artificial graphite, styrene-butadiene rubber, conductive carbon black (SP), single-arm carbon nanotubes, and sodium carboxymethylcellulose in the first portion is changed to 70:12.2:15:1:0.3:1.5; the unit area weight of the semi-finished negative electrode plate is changed to 0.78 mg/cm², and the unit area weight of the negative electrode plate is changed to 10.219 mg/cm², with other parameters remaining unchanged.

The silicon content in the negative electrode active substance layer of the negative electrode plate is 5.34 wt%.

### Example 15

The example of the present application provides a secondary battery and a method for preparing the same. In Example 15, based on Example 1, the ratio of silicon monoxide, artificial graphite, styrene-butadiene rubber, conductive carbon black (SP), single-arm carbon nanotubes, and sodium carboxymethylcellulose in the first portion is changed to 80:10:7.2:1:0.3:1.5; the unit area weight of the semi-finished negative electrode plate is changed to 0.69 mg/cm², and the unit area weight of the negative electrode plate is changed to 10.130 mg/cm², with other parameters remaining unchanged.

The silicon content in the negative electrode active substance layer of the negative electrode plate is 5.45 wt%.

### Example 16

The example of the present application provides a secondary battery and a method for preparing the same. In Example 16, based on Example 1, the ratio of silicon monoxide, artificial graphite, styrene-butadiene rubber, conductive carbon black (SP), single-arm carbon nanotubes, and sodium carboxymethylcellulose in the first portion is changed to 90:5:2.2:1:0.3:1.5; the unit area weight of the semi-finished negative electrode plate is changed to 0.63 mg/cm², and the unit area weight of the negative electrode plate is changed to 10.045 mg/cm², with other parameters remaining unchanged.

The silicon content in the negative electrode active substance layer of the negative electrode plate is 5.64 wt%.

### Example 17

The example of the present application provides a secondary battery and a method for preparing the same. In Example 17, based on Example 1, the ratio of silicon monoxide, artificial graphite, styrene-butadiene rubber, conductive carbon black (SP), single-arm carbon nanotubes, and sodium carboxymethylcellulose in the first portion is changed to 50:44.2:3:1:0.3:1.5; the unit area weight of the semi-finished negative electrode plate is changed to 0.95 mg/cm², and the unit area weight of the negative electrode plate is changed to 10.358 mg/cm², with other parameters remaining unchanged.

The silicon content in the negative electrode active substance layer of the negative electrode plate is 4.59 wt%.

### Example 18

The example of the present application provides a secondary battery and a method for preparing the same. In Example 18, based on Example 1, the ratio of silicon monoxide, artificial graphite, styrene-butadiene rubber, conductive carbon black (SP), single-arm carbon nanotubes, and sodium carboxymethylcellulose in the first portion is changed to 50:27.2:20:1:0.3:1.5; the unit area weight of the semi-finished negative electrode plate is changed to 1.02 mg/cm², and the unit area weight of the negative electrode plate is changed to 10.427 mg/cm², with other parameters remaining unchanged.

The silicon content in the negative electrode active substance layer of the negative electrode plate is 4.89 wt%.

### Example 19

The example of the present application provides a secondary battery and a method for preparing the same. In Example 19, based on Example 1, the ratio of silicon monoxide, artificial graphite, styrene-butadiene rubber, conductive carbon black (SP), single-arm carbon nanotubes, and sodium carboxymethylcellulose in the first portion is changed to 50:32.7:15:0.5:0.3:1.5; the unit area weight of the semi-finished negative electrode plate is changed to 0.99 mg/cm², and the unit area weight of the negative electrode plate is changed to 10.413 mg/cm², with other parameters remaining unchanged.

The silicon content in the negative electrode active substance layer of the negative electrode plate is 4.75 wt%.

### Example 20

The example of the present application provides a secondary battery and a method for preparing the same. In Example 20, based on Example 1, the ratio of silicon monoxide, artificial graphite, styrene-butadiene rubber, conductive carbon black (SP), single-arm carbon nanotubes, and sodium carboxymethylcellulose in the first portion is changed to 50:28.2:15:5:0.3:1.5; the unit area weight of the semi-finished negative electrode plate is changed to 1.00 mg/cm², and the unit area weight of the negative electrode plate is changed to 10.444 mg/cm², with other parameters remaining unchanged.

The silicon content in the negative electrode active substance layer of the negative electrode plate is 4.79 wt%.

### Example 21

The example of the present application provides a secondary battery and a method for preparing the same. In Example 21, based on Example 1, the ratio of silicon monoxide, artificial graphite, styrene-butadiene rubber, conductive carbon black (SP), single-arm carbon nanotubes, and sodium carboxymethylcellulose in the first portion is changed to 50:32.95:15:1:0.05:1; the unit area weight of the semi-finished negative electrode plate is changed to 0.99 mg/cm², and the unit area weight of the negative electrode plate is changed to 10.410 mg/cm², with other parameters remaining unchanged.

The silicon content in the negative electrode active substance layer of the negative electrode plate is 4.75 wt%.

### Example 22

The example of the present application provides a secondary battery and a method for preparing the same. In Example 22, based on Example 1, the ratio of silicon monoxide, artificial graphite, styrene-butadiene rubber, conductive carbon black (SP), single-arm carbon nanotubes, and sodium carboxymethylcellulose in the first portion is changed to 50:27.8:15:1:1.2:5; the unit area weight of the semi-finished negative electrode plate is changed to 1.01 mg/cm², and the unit area weight of the negative electrode plate is changed to 10.434 mg/cm², with other parameters remaining unchanged.

The silicon content in the negative electrode active substance layer of the negative electrode plate is 4.84 wt%.

### Example 23

The example of the present application provides a secondary battery and a method for preparing the same. In Example 23, based on Example 1, the aspect ratio of the arm carbon nanotube is changed to 1000, with other parameters remaining unchanged.

The silicon content in the negative electrode active substance layer of the negative electrode plate is 4.75 wt%.

### Example 24

The example of the present application provides a secondary battery and a method for preparing the same. In Example 24, based on Example 1, the aspect ratio of the arm carbon nanotube is changed to 10000, with other parameters remaining unchanged.

The silicon content in the negative electrode active substance layer of the negative electrode plate is 4.75 wt%.

### Example 25

The example of the present application provides a secondary battery and a method for preparing the same. In Example 25, based on Example 1, the components of the second portion are changed to a mixture of artificial graphite, silicon monoxide, styrene-butadiene rubber, sodium carboxymethylcellulose, and conductive carbon black (Super-P, SP) in a ratio of 94.2:2:1.8:1.2:0.8; the unit area weight of the negative electrode plate is 9.889 mg/cm², with other parameters remaining unchanged.

The silicon content in the negative electrode active substance layer of the negative electrode plate is 6.72 wt%.

### Example 26

The embodiments of the present application provide a secondary battery and a method for preparing the same. In Example 26, based on Example 1, the components of the second portion are changed to a mixture of artificial graphite, silicon monoxide, styrene-butadiene rubber, sodium carboxymethylcellulose, and conductive carbon black (Super-P, SP) in a ratio of 91.2:5:1.8:1.2:0.8; the unit area weight of the negative electrode plate is 9.17 mg/cm², with other parameters remaining unchanged.

The silicon content in the negative electrode active substance layer of the negative electrode plate is 9.77 wt%.

### Example 27

The example of the present application provides a secondary battery and a method for preparing the same. In Example 27, based on Example 1, the components of the second portion are changed to a mixture of artificial graphite, silicon monoxide, styrene-butadiene rubber, sodium carboxymethylcellulose, and conductive carbon black (Super-P, SP) in a ratio of 86.2:10:1.8:1.2:0.6:0.2; the unit area weight of the negative electrode plate is 8.199mg/cm², with other parameters remaining unchanged.

The silicon content in the negative electrode active substance layer of the negative electrode plate is 14.75 wt%.

### Example 28

The embodiments of the present application provide a secondary battery and a method for preparing the same. In Example 28, based on Example 1, the components of the second portion are changed to a mixture of artificial graphite, silicon monoxide, styrene-butadiene rubber, sodium carboxymethylcellulose, and conductive carbon black (Super-P, SP) in a ratio of 81.2:15:1.8:1.2:0.5:0.3; the unit area weight of the negative electrode plate is 7.433 mg/cm², with other parameters remaining unchanged.

The silicon content in the negative electrode active substance layer of the negative electrode plate is 19.58 wt%.

### Example 29

The embodiments of the present application provide a secondary battery and a method for preparing the same. In Example 29, based on Example 1, the components of the second portion are changed to a mixture of artificial graphite, silicon monoxide, styrene-butadiene rubber, sodium carboxymethylcellulose, and conductive carbon black (Super-P, SP) in a ratio of 76.2:20:1.8:1.2:0.4:0.4; the unit area weight of the negative electrode plate is 6.814 mg/cm², with other parameters remaining unchanged.

The silicon content in the negative electrode active substance layer of the negative electrode plate is 24.28 wt%.

### Example 30

The example of the present application provides a secondary battery and a method for preparing the same. In Example 30, based on Example 27, the silicon monoxide in the second portion is replaced with a silicon-carbon material. The silicon-carbon material includes a structure of elemental silicon deposited within the pore passages of porous carbon, with other parameters remaining unchanged.

The silicon content in the negative electrode active substance layer of the negative electrode plate is 14.75 wt%.

### Comparative Example 1

The comparative example of the present application provides a secondary battery and a method for preparing the same. In Comparative Example 1, based on Example 1, the preparation method of the negative electrode plate is changed to: mixing artificial graphite, silicon monoxide, styrene-butadiene rubber, sodium carboxymethylcellulose, conductive carbon black (Super-P, SP), and single-arm carbon nanotubes in a mass ratio of 93.2%:3%:1.8%:1.2%:0.7%:0.1% in deionized water, and stirring the mixture thoroughly to prepare a negative electrode slurry; uniformly coating the slurry on a copper current collector with a thickness of 8 µm, and obtaining a negative electrode plate with a compaction density of 1.65 g/cm³ and a unit area weight of 10.79 mg/cm² after drying, cold pressing, and cutting. Other parameters remain unchanged.

The silicon content in the negative electrode active substance layer of the negative electrode plate is 3 wt%.

### Comparative Example 2

The comparative example of the present application provides a secondary battery and a method for preparing the same. In Comparative Example 2, based on Example 1, the preparation method of the negative electrode plate is changed to: mixing artificial graphite, silicon monoxide, styrene-butadiene rubber, sodium carboxymethylcellulose, conductive carbon black (Super-P, SP), and single-arm carbon nanotubes in a mass ratio of 91.2%:5%:1.8%:1.2%:0.7%:0.1% in deionized water, and stirring the mixture thoroughly to prepare a negative electrode slurry; uniformly coating the slurry on a copper current collector with a thickness of 8 µm, and obtaining a negative electrode plate with a compaction density of 1.65 g/cm³ and a unit area weight of 10.211 mg/cm² after drying, cold pressing, and cutting. Other parameters remain unchanged.

The silicon content in the negative electrode active substance layer of the negative electrode plate is 5 wt%.

### Comparative Example 3

The comparative example of the present application provides a secondary battery and a method for preparing the same. In Comparative Example 3, based on Example 1, the preparation method of the negative electrode plate is changed to: mixing artificial graphite, silicon monoxide, styrene-butadiene rubber, sodium carboxymethylcellulose, conductive carbon black (Super-P, SP), and single-arm carbon nanotubes in a mass ratio of 87.2%:9%:1.8%:1.2%:0.5%:0.3% in deionized water, and stirring the mixture thoroughly to prepare a negative electrode slurry; uniformly coating the slurry on a copper current collector with a thickness of 8 µm, and obtaining a negative electrode plate with a compaction density of 1.65 g/cm³ and a unit area weight of 9.22 mg/cm² after drying, cold pressing, and cutting. Other parameters remain unchanged.

The silicon content in the negative electrode active substance layer of the negative electrode plate is 9 wt%.

### Comparative Example 4

The comparative example of the present application provides a secondary battery and a method for preparing the same. In Comparative Example 4, based on Example 1, the preparation method of the negative electrode plate is changed to: mixing artificial graphite, silicon monoxide, styrene-butadiene rubber, sodium carboxymethylcellulose, conductive carbon black (Super-P, SP), and single-arm carbon nanotubes in a mass ratio of 82.2%:14%:1.8%:1.2%:0.5%:0.3% in deionized water, and stirring the mixture thoroughly to prepare a negative electrode slurry; uniformly coating the slurry on a copper current collector with a thickness of 8 µm, and obtaining a negative electrode plate with a compaction density of 1.65 g/cm³ and a unit area weight of 8.221 mg/cm² after drying, cold pressing, and cutting. Other parameters remain unchanged.

The silicon content in the negative electrode active substance layer of the negative electrode plate is 14 wt%.

### Comparative Example 5

The comparative example of the present application provides a secondary battery and a method for preparing the same. In Comparative Example 5, based on Example 1, the preparation method of the negative electrode plate is changed to: mixing artificial graphite, silicon monoxide, styrene-butadiene rubber, sodium carboxymethylcellulose, conductive carbon black (Super-P, SP), and single-arm carbon nanotubes in a mass ratio of 77.2%:19%:1.8%:1.2%:0.5%:0.3% in deionized water, and stirring the mixture thoroughly to prepare a negative electrode slurry; uniformly coating the slurry on a copper current collector with a thickness of 8 µm, and obtaining a negative electrode plate with a compaction density of 1.65 g/cm³ and a unit area weight of 7.418 mg/cm² after drying, cold pressing, and cutting. Other parameters remain unchanged.

The silicon content in the negative electrode active substance layer of the negative electrode plate is 19 wt%.

### Comparative Example 6

The comparative example of the present application provides a secondary battery and a method for preparing the same. In Comparative Example 6, based on Example 1, the preparation method of the negative electrode plate is changed to: mixing artificial graphite, silicon monoxide, styrene-butadiene rubber, sodium carboxymethylcellulose, conductive carbon black (Super-P, SP), and single-arm carbon nanotubes in a mass ratio of 72.2%:24%:1.8%:1.2%:0.5%:0.3% in deionized water, and stirring the mixture thoroughly to prepare a negative electrode slurry; uniformly coating the slurry on a copper current collector with a thickness of 8 µm, and obtaining a negative electrode plate with a compaction density of 1.65 g/cm³ and a unit area weight of 6.758mg/cm² after drying, cold pressing, and cutting. Other parameters remain unchanged.

The silicon content in the negative electrode active substance layer of the negative electrode plate is 24 wt%.

### Comparative Example 7

The comparative example of the present application provides a secondary battery and a method for preparing the same. In Comparative Example 7, based on Comparative Example 4, the silicon monoxide is replaced with a silicon-carbon material. The silicon-carbon material includes a structure of elemental silicon deposited within the pore passages of porous carbon, with other parameters remaining unchanged.

The silicon content in the negative electrode active substance layer of the negative electrode plate is 14 wt%.

### Comparative Example 8

The comparative example of the present application provides a secondary battery and a method for preparing the same. In Comparative Example 8, based on Example 1, the unit area weight of the semi-finished negative electrode plate is changed to 3.75 mg/cm², and the unit area weight of the negative electrode plate is changed to 6.581 mg/cm², with other parameters remaining unchanged.

The silicon content in the negative electrode active substance layer of the negative electrode plate is 28.5 wt%.

### Comparative Example 9

The comparative example of the present application provides a secondary battery and a method for preparing the same. In Comparative Example 9, the first portion in Example 29 is designed as the second portion and the second portion in Example 29 is designed as the first portion, with other parameters remaining unchanged.

The silicon content in the negative electrode active substance layer of the negative electrode plate is 24.28 wt%.

The mass percentage of the silicon-based material in the first portion, the mass percentage of the silicon-based material in the second portion, C₂/C₁, (C₁ - C₂)/C₃ × 100%, h₁, h₂, and h₂/h₁ of the secondary batteries of Examples 1 to 30 and Comparative Examples 1 to 9 are shown in Table 1.

**Table 1 Partial parameters of the secondary batteries of Examples 1 to 30 and Comparative Examples 1 to 9**

| Item | Mass percentage of silicon-based material in the first portion (wt%) | Mass percentage of silicon-based material in the second portion (wt%) | C₂/C₁ | (C₁-C₂)/ C₃*100% | h₁(µm) | h₂(µm) | h₂/h₁ |
|---|---|---|---|---|---|---|---|
| Example 1 | 50 | 0 | 85% | 72% | 6.3 | 55.0 | 8.8 |
| Example 2 | 50 | 0 | 30% | 92% | 21.3 | 19.2 | 0.9 |
| Example 3 | 50 | 0 | 50% | 89% | 16.0 | 32.1 | 2.0 |
| Example 4 | 50 | 0 | 70% | 83% | 10.5 | 45.2 | 4.3 |
| Example 5 | 50 | 0 | 95% | 44% | 3.2 | 62.1 | 19.6 |
| Example 6 | 50 | 0 | 95% | 20% | 7.4 | 61.9 | 8.4 |
| Example 7 | 50 | 0 | 90% | 62% | 4.6 | 58.8 | 12.7 |
| Example 8 | 50 | 0 | 90% | 50% | 5.9 | 58.5 | 9.9 |
| Example 9 | 50 | 0 | 90% | 75% | 4.4 | 57.7 | 13.0 |
| Example 10 | 50 | 0 | 90% | 60% | 4.4 | 59.2 | 13.4 |
| Example 11 | 30 | 0 | 85% | 72% | 8.0 | 54.9 | 6.9 |
| Example 12 | 40 | 0 | 85% | 72% | 6.8 | 55.0 | 8.1 |
| Example 13 | 60 | 0 | 85% | 72% | 5.6 | 55.0 | 9.9 |
| Example 14 | 70 | 0 | 85% | 72% | 4.9 | 55.2 | 11.2 |
| Example 15 | 80 | 0 | 85% | 72% | 4.4 | 55.2 | 12.6 |
| Example 16 | 90 | 0 | 85% | 72% | 4.0 | 55.1 | 13.8 |
| Example 17 | 50 | 0 | 85% | 72% | 6.0 | 54.9 | 9.1 |
| Example 18 | 50 | 0 | 85% | 72% | 6.5 | 54.9 | 8.5 |
| Example 19 | 50 | 0 | 85% | 72% | 6.3 | 55.0 | 8.8 |
| Example 20 | 50 | 0 | 85% | 72% | 6.3 | 55.1 | 8.7 |
| Example 21 | 50 | 0 | 85% | 72% | 6.2 | 55.0 | 8.8 |
| Example 22 | 50 | 0 | 85% | 72% | 6.4 | 55.0 | 8.6 |
| Example 23 | 50 | 0 | 85% | 72% | 6.3 | 55.0 | 8.8 |
| Example 24 | 50 | 0 | 85% | 72% | 6.3 | 55.0 | 8.8 |
| Example 25 | 50 | 2 | 85% | 72% | 6.3 | 51.8 | 8.2 |
| Example 26 | 50 | 5 | 85% | 72% | 6.3 | 47.7 | 7.6 |
| Example 27 | 50 | 10 | 85% | 72% | 6.3 | 42.0 | 6.7 |
| Example 28 | 50 | 15 | 85% | 72% | 6.3 | 37.4 | 5.9 |
| Example 29 | 50 | 20 | 85% | 72% | 6.3 | 33.8 | 5.4 |
| Example 30 | 50 | 10 | 85% | 72% | 6.3 | 42.0 | 6.7 |
| Comparative Example 1 | / | / | / | / | / | / | / |
| Comparative Example 2 | / | / | / | / | / | / | / |
| Comparative Example 3 | / | / | / | / | / | / | / |
| Comparative Example 4 | / | / | / | / | / | / | / |
| Comparative Example 5 | / | / | / | / | / | / | / |
| Comparative Example 6 | / | / | / | / | / | / | / |
| Comparative Example 7 | / | / | / | / | / | / | / |
| Comparative Example 8 | 50 | 0 | 25% | 93% | 22.8 | 15.9 | 0.7 |
| Comparative Example 9 | 20 | 50 | 21.00% | 93% | 33.4 | 6.7 | 0.2 |

The thickness h₁ of the first portion and the thickness h₂ of the second portion of the negative electrode plate are measured by the following method:

Use a scanning electron microscope (SEM) (e.g., ZEISS Sigma 300) to take pictures of the cross-section of the negative electrode plate, and measure and calculate the thickness h₁ of the first portion and the thickness h₂ of the second portion of the negative electrode plate.

The unit area capacity C₁ of the positive electrode active substance layer is measured using the following method:
S1: cleaning any one side of a double-sided positive electrode plate thoroughly;
S2: using a mold to punch the single-sided positive electrode plate into a small disc with a radius of 7 mm and an area of S = 0.49π, where the unit of area S is cm²;
S3: after drying the single-sided positive electrode plate with the area S, transferring the single-sided positive electrode plate to a glove box to manufacture a paired lithium half-cell; and
S4: using the testing equipment from Wuhan Land Electronics to measure the capacity Q₁ of the above disc, where the unit of capacity Q₁ is mAh; by calculation, the unit area capacity of the positive electrode active substance layer can be obtained as C₁ = Q₁ ÷ S, with the unit area capacity of the negative electrode active substance layer C₁ expressed in mAh/cm².

The unit area capacity C₂ of the second portion and the unit area capacity C₃ of the first portion are measured by the following method:
S1: cleaning any one side of a double-sided negative electrode plate thoroughly;
S2: using a mold to punch the single-sided negative electrode plate into a small disc with a radius of 7 mm and an area of S = 0.49π, where the unit of area S is cm²;
S3: after drying the single-sided negative electrode plate with the area S, transferring the single-sided negative electrode plate to a glove box to manufacture a paired lithium half-cell;
S4: using the testing equipment from Wuhan Land Electronics to measure the capacity Q₄ of the above disc, where the unit of capacity Q₄ is mAh; by calculation, the unit area capacity of the negative electrode active substance layer can be obtained as C₄ = Q₄ ÷ S, with the unit area capacity of the negative electrode active substance layer C₄ expressed in mAh/cm²;
S5: using tape to peel off the second portion of the single-sided negative electrode plate that has been processed in step S1; and
S6: testing the capacity Q₃ of the first portion of the negative electrode plate, from which the second portion has been peeled off, by using the same method as in steps S2, S3, and S4, where the unit of capacity Q₃ is mAh; by calculation, the unit area capacity of the first portion can be obtained as C₃ = Q₃ ÷ S, with the unit area capacity of the negative electrode active substance layer expressed in mAh/cm²; the unit area capacity of the second portion is C₂ = C₄ - C₃, with the unit area capacity of the negative electrode active substance layer C₂ expressed in mAh/cm².

The formulas of the first portion and the second portion of the secondary batteries of Examples 1 to 30 and Comparative Examples 1 to 9 are shown in Table 2.

**Table 2 Formulas of the first portion and the second portion of the secondary batteries of Examples 1 to 30 and Comparative Examples 1 to 9**

| Item | First portion | | | | | | | | Second portion | |
|---|---|---|---|---|---|---|---|---|---|---|
| | Silicon-based material type | Silicon-based material content (wt%) | Graphite content (wt%) | Styrene-butadiene rubber content (wt%) | Conductive carbon content (wt%) | Carbon nanotube content (wt%) | Aspect ratio of carbon nanotube | Surfactant content (wt%) | Silicon-based material type | Silicon-based material content (wt%) |
| Example 1 | Silicon monoxide | 50 | 32.2 | 15 | 1 | 0.3 | 5000 | 1.5 | / | 0 |
| Example 2 | Silicon monoxide | 50 | 32.2 | 15 | 1 | 0.3 | 5000 | 1.5 | / | 0 |
| Example 3 | Silicon monoxide | 50 | 32.2 | 15 | 1 | 0.3 | 5000 | 1.5 | / | 0 |
| Example 4 | Silicon monoxide | 50 | 32.2 | 15 | 1 | 0.3 | 5000 | 1.5 | / | 0 |
| Example 5 | Silicon monoxide | 50 | 32.2 | 15 | 1 | 0.3 | 5000 | 1.5 | / | 0 |
| Example 6 | Silicon monoxide | 50 | 32.2 | 15 | 1 | 0.3 | 5000 | 1.5 | / | 0 |
| Example 7 | Silicon monoxide | 50 | 32.2 | 15 | 1 | 0.3 | 5000 | 1.5 | / | 0 |
| Example 8 | Silicon monoxide | 50 | 32.2 | 15 | 1 | 0.3 | 5000 | 1.5 | / | 0 |
| Example 9 | Silicon monoxide | 50 | 32.2 | 15 | 1 | 0.3 | 5000 | 1.5 | / | 0 |
| Example 10 | Silicon monoxide | 50 | 32.2 | 15 | 1 | 0.3 | 5000 | 1.5 | / | 0 |
| Example 11 | Silicon monoxide | 30 | 63.7 | 3.5 | 1 | 0.3 | 5000 | 1.5 | / | 0 |
| Example 12 | Silicon monoxide | 40 | 55 | 2.2 | 1 | 0.3 | 5000 | 1.5 | / | 0 |
| Example 13 | Silicon monoxide | 60 | 22.2 | 15 | 1 | 0.3 | 5000 | 1.5 | / | 0 |
| Example 14 | Silicon monoxide | 70 | 12.2 | 15 | 1 | 0.3 | 5000 | 1.5 | / | 0 |
| Example 15 | Silicon monoxide | 80 | 10 | 7.2 | 1 | 0.3 | 5000 | 1.5 | / | 0 |
| Example 16 | Silicon monoxide | 90 | 5 | 2.2 | 1 | 0.3 | 5000 | 1.5 | / | 0 |
| Example 17 | Silicon monoxide | 50 | 44.2 | 3 | 1 | 0.3 | 5000 | 1.5 | / | 0 |
| Example 18 | Silicon monoxide | 50 | 27.2 | 20 | 1 | 0.3 | 5000 | 1.5 | / | 0 |
| Example 19 | Silicon monoxide | 50 | 32.7 | 15 | 0.5 | 0.3 | 5000 | 1.5 | / | 0 |
| Example 20 | Silicon monoxide | 50 | 28.2 | 15 | 5 | 0.3 | 5000 | 1.5 | / | 0 |
| Example 21 | Silicon monoxide | 50 | 32.95 | 15 | 1 | 0.05 | 5000 | 1 | / | 0 |
| Example 22 | Silicon monoxide | 50 | 27.8 | 15 | 1 | 1.2 | 5000 | 5 | / | 0 |
| Example 23 | Silicon monoxide | 50 | 32.2 | 15 | 1 | 0.3 | 1000 | 1.5 | / | 0 |
| Example 24 | Silicon monoxide | 50 | 32.2 | 15 | 1 | 0.3 | 10000 | 1.5 | / | 0 |
| Example 25 | Silicon monoxide | 50 | 32.2 | 15 | 1 | 0.3 | 5000 | 1.5 | Silicon monoxide | 2 |
| Example 26 | Silicon monoxide | 50 | 32.2 | 15 | 1 | 0.3 | 5000 | 1.5 | Silicon monoxide | 5 |
| Example 27 | Silicon monoxide | 50 | 32.2 | 15 | 1 | 0.3 | 5000 | 1.5 | Silicon monoxide | 10 |
| Example 28 | Silicon monoxide | 50 | 32.2 | 15 | 1 | 0.3 | 5000 | 1.5 | Silicon monoxide | 15 |
| Example 29 | Silicon monoxide | 50 | 32.2 | 15 | 1 | 0.3 | 5000 | 1.5 | Silicon monoxide | 20 |
| Example 30 | Silicon-carbon material | 50 | 32.2 | 15 | 1 | 0.3 | 5000 | 1.5 | Silicon-carbon material | 10 |
| Comparative Example 1 | A layer of active substance with 3 wt% silicon monoxide | | | | | | | | | |
| Comparative Example 2 | A layer of active substance with 5 wt% silicon monoxide | | | | | | | | | |
| Comparative Example 3 | A layer of active substance with 9 wt% silicon monoxide | | | | | | | | | |
| Comparative Example 4 | A layer of active substance with 14 wt% silicon monoxide | | | | | | | | | |
| Comparative Example 5 | A layer of active substance with 19 wt% silicon monoxide | | | | | | | | | |
| Comparative Example 6 | A layer of active substance with 24 wt% silicon monoxide | | | | | | | | | |
| Comparative Example 7 | A layer of active substance with 14 wt% silicon-carbon material | | | | | | | | | |
| Comparative Example 8 | Silicon monoxide | 50 | 32.2 | 15 | 1 | 0.3 | 5000 | 1.5 | / | 0 |
| Comparative Example 9 | Silicon monoxide | 20 | 76.2 | 1.8 | 0.5 | 0.3 | 5000 | 1.2 | Silicon monoxide | 50 |

In Examples 1 to 30, the silicon-based material in the first portion has a Dv50 of 6 µm and a Dv99 of 10.5 µm. In Examples 25 to 30, the silicon-based material in the second portion has a Dv50 of 6 µm. In Examples 1 to 30, the graphite in the first portion has a Dv50 of 5.1 µm and a Dv99 of 11.8 µm. In Examples 1 to 30, the graphite in the second portion has a Dv50 of 14.8 µm. In Comparative Examples 1 to 9, the silicon-based material has a Dv50 of 6 µm and a Dv99 of 10.5 µm, and the graphite has a Dv50 of 5.1 µm.

### Test Example 1

Secondary batteries from Examples 1 to 30 and Comparative Examples 1 to 9 were taken, and the initial Coulombic efficiency (ICE), capacity retention rate ρ1, expansion rate Δh300 after 300 cycles, and storage reversible capacity retention rate ρ2 were respectively measured. The results are shown in Table 3.

### Initial Coulombic efficiency test (initial efficiency):

The battery is charged at a rate of 0.02 C to 3.4 V at 45 °C, then charged at a rate of 0.1 C to 3.75 V, with the measured capacity marked as C0. Subsequently, the battery is charged at a rate of 0.33 C to 4.25 V at 25 °C and then charged at a constant voltage of 4.25 V to 0.05 C, with the measured capacity marked as C1. Finally, the battery is discharged at a rate of 0.33 C to 2.5 V, with the capacity measured marked as D0. The initial Coulombic efficiency (ICE) of the secondary battery is calculated as ICE = D0/(C0 + C1) × 100%.

### Cycle test:

The secondary battery is charged in a constant temperature environment at 45 °C at a constant current rate of 1 D0 until the voltage reaches 4.25 V, followed by constant voltage charging at 4.25 V until the current is less than or equal to 0.05 D0. After resting for 5 minutes, the secondary battery is then discharged at a constant current rate of 1 C until the voltage drops to 2.5 V (the capacity at this step is marked as C3). After resting for 5 minutes, the secondary battery undergoes 500 charge-discharge cycles based on the above method (the discharge capacity at the 500th cycle is marked as C500). The cycle capacity retention rate of the secondary battery is calculated as ρ1 = C500 ÷ C3 × 100%.

### Negative electrode plate expansion test:

The thickness of the negative electrode plate of the secondary battery after the cold pressing process is recorded as h0. Following the cycle performance measurement method for the secondary battery at 45 °C, the secondary battery undergoes 300 cycles. The secondary battery is charged at a constant current rate of 1 D0 until the voltage reaches 4.25 V, followed by constant voltage charging at 4.25 V until the current is less than or equal to 0.05 C. After resting for 5 minutes, the battery is in a fully charged state. The secondary battery after the cycle is then disassembled in a dry room, and the thickness of the negative electrode plate after 300 cycles is recorded as h300. The electrode plate expansion rate after 300 cycles at 45 °C is calculated as Δh300 = (h300 - h0)/h0 × 100%.

### Storage test:

The secondary battery is charged in an environment at 25 °C at a constant current rate of 0.33 D0 until the voltage reaches 4.25 V, followed by constant voltage charging at 4.25 V until the current is less than or equal to 0.05 D0. After resting for 5 minutes, the secondary battery is discharged at a constant current rate of 0.33 D0 to a voltage of 2.5 V (the capacity at this step is marked as C4). The secondary battery is charged again at a constant current rate of 0.33 D0 until the voltage reaches 4.25 V, followed by constant voltage charging at 4.25 V until the current is less than or equal to 0.05 D0. At this point, the secondary battery is in a fully charged state. The secondary battery is transferred to a 60 °C environment for storage of 100 days. Subsequently, the secondary battery is transferred to a 25 °C environment and discharged at a constant current rate of 0.33 D0 until the voltage drops to 2.5 V. Finally, the secondary battery is charged at a constant current rate of 0.33 D0 until the voltage reaches 4.25 V, followed by constant voltage charging at 4.25 V until the current is less than or equal to 0.05 D0. After resting for 5 minutes, the secondary battery is discharged at a constant current rate of 0.33 D0 until the voltage drops to 2.5 V (the capacity at this step is marked as C100). The storage reversible capacity retention rate of the secondary battery is calculated as ρ2 = C100 ÷ C4 × 100%.

**Table 3 Performance of the secondary batteries of Examples 1 to 30 and Comparative Examples 1 to 9**

| Item | Silicon content (wt%) of the negative electrode active substance layer | ICE | ρ1 | Δh300 | ρ2 |
|---|---|---|---|---|---|
| Example 1 | 4.75 | 92.9% | 93.4% | 33.4% | 95.6% |
| Example 2 | 25.66 | 85.7% | 82.2% | 77.5% | 90.2% |
| Example 3 | 15.92 | 87.8% | 86.5% | 51.5% | 92.5% |
| Example 4 | 8.81 | 90.0% | 89.2% | 43.5% | 93.9% |
| Example 5 | 2.25 | 93.5% | 94.0% | 27.9% | 95.8% |
| Example 6 | 4.96 | 92.6% | 92.1% | 34.3% | 94.9% |
| Example 7 | 3.39 | 93.0% | 94.1% | 28.9% | 96.2% |
| Example 8 | 4.25 | 93.1% | 93.9% | 32.4% | 95.6% |
| Example 9 | 3.31 | 93.2% | 93.8% | 28.6% | 96.4% |
| Example 10 | 3.23 | 93.2% | 93.8% | 28.8% | 96.3% |
| Example 11 | 3.54 | 92.5% | 92.5% | 34.8% | 95.4% |
| Example 12 | 4.12 | 92.9% | 92.6% | 40.0% | 95.5% |
| Example 13 | 5.13 | 92.8% | 93.2% | 34.0% | 95.5% |
| Example 14 | 5.34 | 92.8% | 93.0% | 34.3% | 95.4% |
| Example 15 | 5.45 | 92.7% | 92.6% | 39.3% | 94.7% |
| Example 16 | 5.64 | 91.5% | 91.7% | 45.6% | 94.2% |
| Example 17 | 4.59 | 92.5% | 92.5% | 43.8% | 94.3% |
| Example 18 | 4.89 | 92.9% | 93.3% | 31.8% | 95.5% |
| Example 19 | 4.75 | 92.9% | 93.4% | 34.0% | 95.5% |
| Example 20 | 4.79 | 92.5% | 92.8% | 33.8% | 95.1% |
| Example 21 | 4.75 | 92.5% | 92.7% | 37.2% | 95.0% |
| Example 22 | 4.84 | 92.4% | 93.0% | 31.8% | 95.0% |
| Example 23 | 4.75 | 92.5% | 92.9% | 36.8% | 95.3% |
| Example 24 | 4.75 | 92.9% | 93.5% | 32.2% | 95.6% |
| Example 25 | 6.72 | 91.8% | 90.3% | 42.5% | 94.2% |
| Example 26 | 9.77 | 90.1% | 89.3% | 47.2% | 93.5% |
| Example 27 | 14.75 | 87.9% | 85.9% | 53.4% | 92.5% |
| Example 28 | 19.58 | 86.6% | 83.3% | 58.7% | 91.7% |
| Example 29 | 24.28 | 86.0% | 81.1% | 79.0% | 90.6% |
| Example 30 | 14.75 | 88.9% | 89.9% | 44.8% | 94.3% |
| Comparative Example 1 | 3 | 91.8% | 92.0% | 37.2% | 95.0% |
| Comparative Example 2 | 5 | 90.8% | 90.2% | 47.6% | 93.8% |
| Comparative Example 3 | 9 | 88.9% | 86.9% | 55.8% | 92.5% |
| Comparative Example 4 | 14 | 86.9% | 83.7% | 63.2% | 91.4% |
| Comparative Example 5 | 19 | 86.0% | 80.2% | 76.9% | 90.6% |
| Comparative Example 6 | 24 | 85.3% | 77.9% | 93.2% | 89.4% |
| Comparative Example 7 | 14 | 87.8% | 87.9% | 53.5% | 93.1% |
| Comparative Example 8 | 28.5 | 84.1% | 77.0% | 81.0% | 89.1% |
| Comparative Example 9 | 24.28 | 85.2% | 73.1% | 82.5% | 87.2% |

From the comparison between Example 5 and Comparative Example 1, it is evident that the silicon content in the negative electrode active substance layer of the secondary battery in Comparative Example 1 is 3 wt%, while the silicon content in the negative electrode active substance layer of the secondary battery in Example 5 is < 3 wt%. The initial Coulombic efficiency (ICE), cycle capacity retention rate ρ1, and storage reversible capacity retention rate ρ2 of the secondary battery in Example 5 are all higher than those of the secondary battery in Comparative Example 1. The electrode plate expansion rate Δh300 after 300 cycles at 45 °C of the secondary battery in Example 5 is significantly lower than that of the secondary battery in Comparative Example 1.

From the comparison between Examples 1, 6 to 12, and 17 to 24 and Comparative Example 1, it is evident that the silicon content in the negative electrode active substance layer of the secondary battery in Comparative Example 1 is 3 wt%, while the silicon content in the negative electrode active substance layer of the secondary battery in Examples 1, 6 to 12, and 17 to 24 is ≥ 3 wt%. In Examples 1, 6 to 12, and 17 to 24, the secondary batteries, in the premise of higher silicon content in the negative electrode active substance layer, have an initial Coulombic efficiency (ICE) higher than that of the secondary battery in Comparative Example 1. The cycle capacity retention rate ρ1 of the secondary batteries in Examples 1, 6 to 12, and 17 to 24 is higher than that of the secondary battery in Comparative Example 1. The electrode plate expansion rate Δh300 after 300 cycles at 45 °C of the secondary batteries in Examples 1, 6 to 12, and 17 to 24 is lower than that of the secondary battery in Comparative Example 1. In Example 21, the secondary batteries, in the premise of higher silicon content in the negative electrode active substance layer, have an electrode plate expansion rate Δh300 after 300 cycles at 45 °C equal to that of the secondary battery in Comparative Example 1. In Examples 12 and 17, the secondary batteries, in the premise of higher silicon content in the negative electrode active substance layer, have an electrode plate expansion rate Δh300 after 300 cycles at 45 °C slightly higher than that of the secondary battery in Comparative Example 1. The storage reversible capacity retention rate ρ2 of the secondary batteries in Examples 1, 7 to 12, 18 to 20, and 23 to 24 is higher than that of the secondary battery in Comparative Example 1. In Examples 21 to 22, the secondary batteries, in the premise of higher silicon content in the negative electrode active substance layer, have a storage reversible capacity retention rate ρ2 equal to that of the secondary battery in Comparative Example 1. In Examples 6 and 17, the secondary batteries, in the premise of higher silicon content in the negative electrode active substance layer, have a storage reversible capacity retention rate ρ2 slightly lower than that of the secondary battery in Comparative Example 1.

From the comparison between Examples 4, 13 to 16, and 25 and Comparative Example 2, it is evident that the silicon content in the negative electrode active substance layer of the secondary battery in Comparative Example 2 is 5 wt%, while the silicon content in the negative electrode active substance layer of the secondary battery in Examples 1, 6 to 12, and 17 to 24 is ≥ 5 wt%. The initial Coulombic efficiency (ICE) of the secondary batteries in Examples 13 to 16 and 25 is higher than that of the secondary battery in Comparative Example 2. In Example 4, the secondary battery, in the premise of higher silicon content in the negative electrode active substance layer, has an ICE slightly lower than that of the secondary battery in Comparative Example 2. The cycle capacity retention rate ρ1 of the secondary batteries in Examples 13 to 16 and 25 is higher than that of the secondary battery in Comparative Example 2. In Example 4, the secondary battery, in the premise of higher silicon content in the negative electrode active substance layer, has a cycle capacity retention rate ρ1 slightly lower than that of the secondary battery in Comparative Example 2. The electrode plate expansion rate Δh300 after 300 cycles at 45 °C of the secondary batteries in Examples 4, 13 to 16, and 25 is lower than that of the secondary battery in Comparative Example 2. The storage reversible capacity retention rate ρ2 of the secondary batteries in Examples 4, 13 to 16, and 25 is higher than that of the secondary battery in Comparative Example 2.

From the comparison between Example 26 and Comparative Example 3, it is evident that the silicon content in the negative electrode active substance layer of the secondary battery in Comparative Example 3 is 9 wt%, while the silicon content in the negative electrode active substance layer of the secondary battery in Example 26 is ≥ 9 wt%. In Example 26, the secondary battery, in the premise of higher silicon content in the negative electrode active substance layer, has an initial Coulombic efficiency (ICE), cycle capacity retention rate ρ1, and storage reversible capacity retention rate ρ2 significantly higher than those of the secondary battery in Comparative Example 3. The electrode plate expansion rate Δh300 after 300 cycles at 45 °C of the secondary battery in Example 26 is significantly lower than that of the secondary battery in Comparative Example 3.

From the comparison between Examples 3 and 27 and Comparative Example 4, it is evident that the silicon content in the negative electrode active substance layer of the secondary battery in Comparative Example 4 is 14 wt%, while the silicon content in the negative electrode active substance layer of the secondary battery in Examples 3, 27, and 30 is ≥ 14 wt%. In Examples 3, 27, and 30, the secondary batteries, in the premise of higher silicon content in the negative electrode active substance layer, have an initial Coulombic efficiency (ICE), cycle capacity retention rate ρ1, and storage reversible capacity retention rate ρ2 significantly higher than those of the secondary battery in Comparative Example 4. The electrode plate expansion rate Δh300 after 300 cycles at 45 °C of the secondary batteries in Examples 3, 27, and 30 is significantly lower than that of the secondary battery in Comparative Example 4.

From the comparison between Example 28 and Comparative Example 5, it is evident that the silicon content in the negative electrode active substance layer of the secondary battery in Comparative Example 5 is 19 wt%, while the silicon content in the negative electrode active substance layer of the secondary battery in Example 28 is ≥ 19 wt%. In Example 28, the secondary battery, in the premise of higher silicon content in the negative electrode active substance layer, has an initial Coulombic efficiency (ICE), cycle capacity retention rate ρ1, and storage reversible capacity retention rate ρ2 significantly higher than those of the secondary battery in Comparative Example 5. The electrode plate expansion rate Δh300 after 300 cycles at 45 °C of the secondary battery in Example 28 is significantly lower than that of the secondary battery in Comparative Example 5.

From the comparison between Examples 2 and 29 and Comparative Example 6, it is evident that the silicon content in the negative electrode active substance layer of the secondary battery in Comparative Example 6 is 24 wt%, while the silicon content in the negative electrode active substance layer of the secondary battery in Example 29 is ≥ 24 wt%. In Examples 2 and 29, the secondary batteries, in the premise of higher silicon content in the negative electrode active substance layer, have an initial Coulombic efficiency (ICE), cycle capacity retention rate ρ1, and storage reversible capacity retention rate ρ2 significantly higher than those of the secondary battery in Comparative Example 6. The electrode plate expansion rate Δh300 after 300 cycles at 45 °C of the secondary batteries in Examples 2 and 29 is significantly lower than that of the secondary battery in Comparative Example 6.

From the comparison among Example 30, Comparative Example 4, and Comparative Example 7, it is evident that both Example 30 and Comparative Example 7 use silicon-carbon material instead of silicon monoxide. In Example 30, the secondary battery, in the premise of higher silicon content in the negative electrode active substance layer, has an initial Coulombic efficiency (ICE), cycle capacity retention rate ρ1, and storage reversible capacity retention rate ρ2 significantly higher than those of the secondary batteries in Comparative Examples 4 and 7. Moreover, the ICE, cycle capacity retention rate ρ1, and storage reversible capacity retention rate ρ2 of Comparative Example 7 are significantly higher than those of Comparative Example 4. The electrode plate expansion rate Δh300 after 300 cycles at 45 °C of the secondary battery in Example 30 is significantly lower than that of the secondary batteries in Comparative Examples 4 and 7, and the electrode plate expansion rate Δh300 after 300 cycles at 45 °C of the secondary battery in Comparative Example 7 is significantly lower than that of the secondary battery in Comparative Example 4.

From the comparison between Example 1 and Comparative Example 8, it is evident that in Comparative Example 8, based on Example 1, the unit area weight of the semi-finished negative electrode plate is changed to 3.75 mg/cm² and the unit area weight of the negative electrode plate is changed to 6.581 mg/cm², with other parameters remaining unchanged. The h₂/h₁ of the secondary battery in Comparative Example 8 is only 0.7, and h₂/h₁ < 0.9, leading to a significant increase in the silicon content in the negative electrode active substance layer of the secondary battery in Comparative Example 8. The initial Coulombic efficiency (ICE), cycle capacity retention rate ρ1, and storage reversible capacity retention rate ρ2 of the secondary battery in Comparative Example 8 are significantly lower than those of the secondary battery in Example 1. The electrode plate expansion rate Δh300 after 300 cycles at 45 °C of the secondary battery in Comparative Example 8 is significantly higher than that of the secondary battery in Example 1.

From the comparison between Example 29 and Comparative Example 9, it is evident that in Comparative Example 9, the first portion of Example 29 is designed as the second portion, and the second portion of Example 29 is designed as the first portion. In the premise of silicon content in the negative electrode active substance layer, the initial Coulombic efficiency (ICE), cycle capacity retention rate ρ1, and storage reversible capacity retention rate ρ2 of Example 29 are significantly higher than those of Comparative Example 9. The electrode plate expansion rate Δh300 after 300 cycles at 45 °C of the secondary battery in Example 29 is lower than that of the secondary battery in Comparative Example 9.

From Examples 1 and 12 to 15, it is evident that when the content of silicon-based material in the first portion is 40 wt% to 80 wt%, the initial Coulombic efficiency (ICE) of the secondary battery is 92.7% to 92.9%, the cycle capacity retention rate ρ1 is 92.6% to 93.4%, the electrode plate expansion rate Δh300 after 300 cycles at 45 °C is 34% to 40%, and the storage reversible capacity retention rate ρ2 is 94.7% to 95.6%. From the comparison between Example 11 and Examples 1 and 12 to 15, it is evident that in the premise of lower silicon content in the negative electrode active substance layer, the ICE, cycle capacity retention rate ρ1, and storage reversible capacity retention rate ρ2 of the secondary battery in Example 11 remain basically unchanged, with no significant improvement. From the comparison between Example 16 and Examples 1 and 12 to 15, it is evident that the electrode plate expansion rate Δh300 after 300 cycles at 45 °C of the secondary battery in Example 16 is too high.

Finally, it should be noted that the above embodiments are only used to illustrate the technical solutions of the present application, but not to limit them. Although the present application has been described in detail with reference to the aforementioned embodiments, those of ordinary skill in the art should understand that they can still modify the technical solutions recorded in the aforementioned embodiments or make equivalent substitutions for some or all of the technical features; however, these modifications or substitutions do not make the essence of the corresponding technical solutions deviate from the spirit and scope of the technical solutions in the embodiments of the present application, and these modifications or substitutions shall all fall within the scope of claims and specification of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. An electrode assembly, wherein the electrode assembly comprises: a positive electrode plate and a negative electrode plate, wherein the negative electrode plate comprises a negative electrode active substance layer and a negative electrode current collector, wherein the negative electrode active substance layer comprises a first portion and a second portion along a thickness direction, wherein the first portion is a portion close to the negative electrode current collector, and a mass percentage of silicon-based material in the first portion is greater than a mass percentage of silicon-based material in the second portion; the positive electrode plate comprises a positive electrode active substance layer, a unit area capacity of the positive electrode active substance layer is C₁, and a unit area capacity of the second portion is C₂, with 30% ≤ C₂/C₁ ≤ 95%.

2. The electrode assembly according to claim 1, wherein 70% ≤ C₂/C₁ ≤ 90%.

3. The electrode assembly according to claim 1 or 2, wherein the first portion is a first negative electrode active layer formed on a surface of the negative electrode current collector, and the second portion is a second negative electrode active layer formed on a surface of the first negative electrode active layer; moreover, a difference between a mass percentage of silicon-based material in the first negative electrode active layer and a mass percentage of silicon-based material in the second negative electrode active layer is 30% to 80%.

4. The electrode assembly according to any one of claims 1 to 3, wherein a unit area capacity of the first portion is C₃, with 20% ≤ (C₁ - C₂)/C₃ ≤ 90%.

5. The electrode assembly according to any one of claims 1 to 4, wherein the unit area capacity of the first portion is C₃, with 50% ≤ (C₁ - C₂)/C₃ ≤ 75%.

6. The electrode assembly according to any one of claims 1 to 5, wherein the first portion comprises 40 wt% to 80 wt% silicon-based materials, and the silicon-based materials comprise silicon oxide and/or silicon carbon.

7. The electrode assembly according to claim 6, wherein the silicon-based materials in the first portion have a Dv50 of 1 µm to 8 µm and a Dv99 ≤ 20 µm.

8. The electrode assembly according to any one of claims 1 to 7, wherein the first portion comprises 10 wt% to 55 wt% graphite.

9. The electrode assembly according to claim 8, wherein the graphite in the first portion has a Dv50 of 1 µm to 8 µm and a Dv99 ≤ 30 µm.

10. The electrode assembly according to any one of claims 1 to 9, wherein the first portion comprises 3 wt% to 20 wt% binder.

11. The electrode assembly according to any one of claims 1 to 10, wherein the first portion comprises 0.5 wt% to 5 wt% particulate conductive agent.

12. The electrode assembly according to any one of claims 1 to 11, wherein the first portion comprises 0.05 wt% to 1.2 wt% carbon nanotubes.

13. The electrode assembly according to claim 12, wherein an aspect ratio of the carbon nanotubes is ≥ 1000.

14. The electrode assembly according to claim 12 or 13, wherein the first portion further comprises 1 wt% to 5 wt% surfactant.

15. The electrode assembly according to any one of claims 1 to 14, wherein a unit area weight of the first portion is 0.5 mg/cm² to 3.6 mg/cm².

16. The electrode assembly according to any one of claims 1 to 15, wherein the second portion comprises a graphite material and a silicon-based material in a mass ratio of (80-100):(0-20).

17. The electrode assembly according to claim 16, wherein a Dv50 of the silicon-based material in the second portion is 1 µm to 8 µm, and a Dv50 of the graphite in the second portion is 1 µm to 20 µm.

18. The electrode assembly according to any one of claims 1 to 17, wherein the negative electrode active substance layer has a unit area weight of 5.19 mg/cm² to 14.26 mg/cm² and a compaction density of 1.4 g/cm³ to 1.85 g/cm³.

19. The electrode assembly according to any one of claims 1 to 18, wherein a thickness of the first portion is h₁, and a thickness of the second portion is h₂, with h₂ ÷ h₁ ≥ 0.9.

20. The electrode assembly according to claim 19, wherein the h₁ is 3 µm to 21.5 µm, and the h₂ is 19 µm to 62.5 µm.

21. The electrode assembly according to any one of claims 1 to 20, wherein a unit area capacity of the negative electrode active substance layer is C₄, with 1.01C₁ ≤ C₄ ≤ 1.2C₁.

22. The electrode assembly according to any one of claims 1 to 21, wherein the second portion comprises at least two sub-portions along the thickness direction, with different mass percentages of silicon-based material in each of the sub-portions.

23. A secondary battery, wherein the secondary battery comprises the electrode assembly according to any one of claims 1 to 22.

24. An electric device, wherein the electric device comprises the secondary battery according to claim 23.
